# DEMANDE DE BREVET EUROPEEN

(11) **EP 1 103 881 A1**
(43) Date de publication de la demande: **30.05.2001**
(21) Numéro de dépôt: 00403273.6
(22) Date de dépôt: 23.11.2000
(51) Int. Cl.: G06F 1/00, G06F 9/46

(54) **Procédé de communication sous plusieurs protocoles entre une application et une ressource de système**

(30) Priorité: 26.11.1999 FR 9914881
(71) Demandeur: Evidian, 78340 Les Clayes sous Bois (FR)
(72) Inventeur: Farcy, Bruno, 78760 Jouars-Ponchartrain (FR)
(74) Mandataire: Denis, Hervé

(57) **Abrégé**

La communication entre un protocole (CMIP) d'une application d'administration et au moins deux protocoles de ressource (DCOM, RMI) d'une base technologique commune (CIM) comprend un multiplexage fait en technologie orientée objets et utilisant la base commune, au moins une classe principale (Core) pour créer (init) au moins deux canaux respectifs avec l'application et au moins la ressource selon l'un desdits protocoles de ressource, au moins une classe (Channel) pour connecter (connect) et déconnecter (disconnect) au moins les deux canaux créés avec l'application et avec la ressource et pour attendre (WaitEvent) une opération, et au moins une classe d'opération (OperFromChannel, OperToChannel) pour établir une communication entre au moins les deux canaux et faire la conversion entre les protocoles d'application et de ressource.

## Description

### Domaine technique.

L'invention concerne l'administration d'au moins une ressource de système représentée dans une technologie orientée objets. La ressource de système qui sera choisie comme exemple pour illustrer l'invention est une ressource informatique, telle que tout ou partie d'un système informatique et/ou d'un réseau informatique et/ou une application informatique. L'invention a pour objet un procédé de communication sous plusieurs protocoles entre au moins une application et au moins une ressource de système représentée selon une base technologique commune, l'accès se faisant avec conversion entre un protocole d'application et au moins deux protocoles de ressource.

L'invention est plus particulièrement adaptée à une ressource informatique dont les données sont représentées selon une base technologique commune mais dont les échanges de données et de services se font selon différents protocoles. La base technologique commune prise comme exemple non limitatif dans la suite du texte est le modèle commun d'informations plus connu sous le nom de modèle CIM (Common Information Model). Ce modèle normalisé est défini par le consortium DMTF (Desktop Management Task Force). Le modèle CIM est orienté objets et permet de définir des schémas conceptuels et des objets du monde réel destinés à l'administration. Il utilise un langage unifié de modélisation connu sous le nom de langage UML (Unified Modelling Language). Ce modèle reçoit actuellement un succès grandissant à cause de son adaptation aux échanges sur les réseaux interconnectés de forte densité et de grande étendue, tels que les réseaux du type internet de la Toile (Web). Il est ainsi utilisé pour l'administration d'entreprise par la Toile, connue actuellement sous l'acronyme WBEM (Web-Based Enterprise Management). En particulier, le modèle CIM offre le double avantage de pouvoir utiliser, d'une part, un navigateur pour chercher des données d'administration et, d'autre part, les technologies d'internet pour administrer. Ce modèle offre encore l'avantage d'être bien adapté à des ressources incluant une architecture d'objets distribués.

La base technologique commune de représentation de données pourrait être différente du modèle CIM. Par exemple, elle pourrait être celle sur laquelle repose l'architecture CORBA (Common Object Request Broker Architecture) définie par le groupement de fournisseurs et d'utilisateurs travaillant à la normalisation de la gestion des objets et connu sous le nom OMG (Object Management Group), et l'architecture OLE/COM (Object Linking and Embedding / Component Object Modeler) de Microsoft. Dans le domaine de l'informatique distribuée, l'architecture CORBA permet de décrire des interfaces de services informatiques indépendamment des fournisseurs et des langages mettant en oeuvre ces services. La description des interfaces est faite à l'aide d'un langage neutre de description d'interface connu sous le nom de langage IDL (Interface Definition Language) défini aussi par le groupement OMG. Ce langage définit les frontières d'un composant que constitue un objet géré, c'est-à-dire les interfaces contractuelles du composant avec des clients potentiels.

### L'art antérieur.

Les fournisseurs de systèmes d'administration ou de composants de systèmes d'administration utilisant une base technologique commune de représentation des objets adoptent des protocoles différents d'échange de données et de services afin de satisfaire à la diversité des besoins des utilisateurs. Pour le modèle CIM qui sert d'exemple, il existe déjà des produits différents issus de fournisseurs différents. Étant donné le succès naissant de ce modèle, il est à prévoir beaucoup d'autres produits différents dans un proche avenir.

D'autre part, l'administration de ressources informatiques est ordinairement faite par une plate-forme d'administration dont on connaît plusieurs types. La plate-forme qui servira d'exemple par la suite est celle connue sous le nom de marque déposée OpenMaster, commercialisée par le demandeur. Cette plate-forme se fonde sur une technologie orientée objets. Selon cette technologie, les moyens constituant une ressource informatique sont convertis en classes d'objets organisées hiérarchiquement dans une base d'informations d'administration MIB (Management Information Base).

La plate-forme prise ici comme exemple non limitatif utilise le protocole normalisé de communication dédié à l'administration connu sous le nom de protocole CMIP (Common Management Information Protocol). Le protocole CMIP repose sur la norme ISO définissant les services pour le transfert des informations d'administration appelés services CMIS (Common Management Information Services). Ce protocole est organisé selon un langage de description des informations d'administration appelé langage GDMO/ASN.1 issu de directives pour la définition d'objets gérés (Guidelines for the Definition of Managed Objects) selon le modèle d'interconnexion connu sous le nom de marque déposée OSI (Open Systems Interconnection) de l'organisme international de normalisation ISO (International Standards Organisation), et de syntaxe ASN1 (Application Syntax Notation One). Pour des raisons de commodité, ce langage sera appelé simplement GDMO.

Une plate-forme d'administration de ressources incluant une ou plusieurs ressources fondées sur la même base technologique commune doit pouvoir communiquer dans les deux sens avec les ressources. La communication se fait par l'intermédiaire d'interfaces hiérarchiques. Les interfaces au niveau des ressources à administrer sont appelées ici agents. Il existe autant de types d'agents que de protocoles utilisés par les ressources administrées et autant d'agents que de ressources administrées. Les interfaces au niveau de la plate-forme d'administration sont aussi des agents, chacun constituant un intégrateur d'agents du même type pour établir une communication bidirectionnelle entre la plate-forme OpenMaster utilisant le protocole GDMO et les agents du même type. Selon cette méthode actuelle, chaque intégrateur d'agents est conçu spécifiquement pour le type d'agents et pour le type de protocole utilisé par la plate-forme. Il faut donc, par exemple, autant d'intégrateurs qu'il y a de produits différents fondés sur le modèle CIM.

Un premier problème de l'art antérieur est le coût de ces intégrateurs. Ils requièrent une connaissance approfondie des protocoles utilisés par les produits différents, une conception compacte, complète et bien adaptée, et des tests de fonctionnement qui doivent souvent être longs pour être exhaustifs. L'importance de ce problème est accrue par la grande diversité des protocoles et leur évolution rapide. Il faut concevoir rapidement de nouveaux intégrateurs d'agents et les adapter sans cesse.

Un second problème de l'art antérieur est le temps de latence qui existe entre le moment de commercialisation d'un nouveau produit et le moment où l'intégrateur qui lui est destiné est opérationnel. Un utilisateur intéressé par ce produit et très tôt acheteur ne pourra s'en servir efficacement dans son système d'administration qu'après une longue période d'attente de la sortie de l'intégrateur correspondant.

### Sommaire de l'invention.

Un premier but de l'invention est d'éviter la conception de nouveaux intégrateurs d'agents pour des produits d'administration reposant sur une même base technologique de représentation de données.

Un second but de l'invention est de réduire fortement, voire annuler, le temps de latence subi par l'utilisateur d'un nouveau produit.

Un troisième but de l'invention est de fournir une solution peu coûteuse à mettre en oeuvre.

L'invention a pour objet un procédé de communication sous plusieurs protocoles entre au moins une application et au moins une ressource de système représentée selon une base technologique commune, la communication se faisant avec conversion entre au moins un protocole d'application et au moins deux protocoles de ressource, caractérisé en ce qu'il comprend un multiplexage fait en technologie orientée objets et utilisant la base commune, au moins une classe principale pour créer au moins deux canaux respectifs avec l'application et au moins la ressource selon l'un desdits protocoles de ressource, au moins une classe pour connecter et déconnecter au moins les deux canaux créés avec l'application et avec la ressource et pour attendre une opération, et au moins une classe d'opération pour établir une communication entre au moins les deux canaux et faire ladite conversion.

L'invention a pour objet corollaire un système d'administration d'un système incluant au moins une ressource représentée selon une base technologique commune, le système d'administration ayant au moins une application communiquant avec au moins ladite ressource, caractérisé en ce que la communication entre au moins l'application et la ressource se fait par des moyens intégrateurs mettant en oeuvre le procédé défini précédemment.

L'invention a pour autre objet corollaire un système, tel qu'un système informatique, incluant au moins une ressource représentée selon une base technologique commune, caractérisé en ce qu'au moins ladite ressource communique avec au moins une application d'un système d'administration selon le procédé défini précédemment.

L'invention a aussi pour autre objet corollaire un programme d'ordinateur chargeable dans des moyens de mémoire internes à un système informatique, caractérisé en ce qu'il comprend des parties de code pour la mise en oeuvre du procédé de l'invention.

L'invention a encore pour objet corollaire un support d'enregistrement de programme d'ordinateur, caractérisé en ce qu'il comprend un programme lisible par une machine d'un système informatique et/ou dans un système d'administration pour commander l'exécution du procédé de l'invention.

### Présentation des dessins.

- La figure 1 est une vue synoptique d'un système d'administration conforme à l'invention de ressources dans un système informatique.
- La figure 2 est une vue schématique d'un exemple de plate-forme d'administration du système d'administration représenté sur la figure 1.
- La figure 3 est une vue schématique très partielle d'un exemple de base MIB représentative de ressources gérées par le système d'administration tel que représenté sur les figures 1 et 2.
- La figure 4 est une vue schématique de la structure impliquée par l'invention parmi les composants illustrés dans les figures 1 et 2 et illustrant des étapes de la solution conforme à l'invention.
- Les figures 5A et 5B indiquent les symboles utilisés de façon classique dans les schémas UML des figures 6-8 et 9-12 et leurs significations respectives.
- La figure 6 est un diagramme UML simplifié de classes, illustrant le traitement, par un intégrateur d'agents CIM conforme à l'invention, d'une requête émise par une application du système d'administration représenté sur les figures 1, 2 et 4.
- La figure 7 est un diagramme UML simplifié de classes, illustrant la fabrication d'une requête de sortie au modèle CIM de l'intégrateur d'agents CIM, à partir d'une requête émise par une application, ainsi que la fabrication d'un réponse éventuelle à la requête.
- La figure 8 est un diagramme UML simplifié de classes, illustrant la fabrication d'une notification de sortie selon le protocole CMIP à partir d'une notification émise par un agent CIM.
- La figure 9 est un diagramme de séquences UML illustrant, avec l'aide des figures 6 et 7, la création d'un canal configuré d'application en réponse à une requête émise par une application et destinée à un agent CIM.
- La figure 10 est un diagramme de séquences UML illustrant, avec l'aide des figures 6 et 7, le traitement de la requête après la création du canal d'application telle que représentée sur la figure 9.
- La figure 11 est un diagramme de séquences UML illustrant, avec l'aide des figures 6 et 7, le traitement d'une réponse à la requête qui a traitée comme indiqué en référence à la figure 10.
- La figure 12 est un diagramme de séquences UML illustrant, avec l'aide des figures 6, 7 et 8, le traitement d'une notification émise par un agent CIM et destinée au serveur d'administration.
- Et la figure 13 est une vue schématique partielle d'un exemple de variante de mise en oeuvre de la solution de l'invention.

### Description détaillée d'exemples illustrant l'invention.

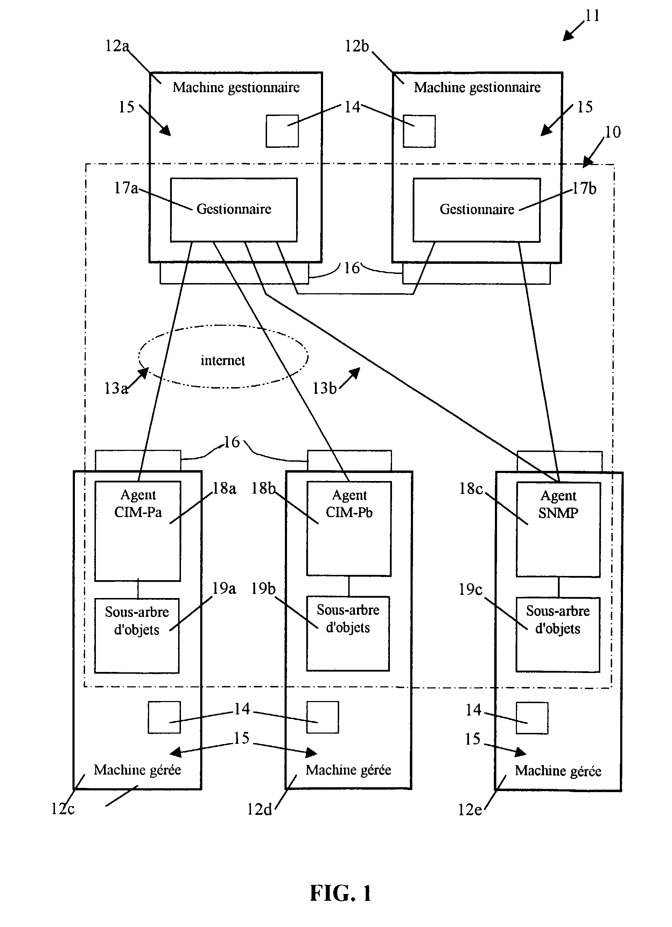

La figure 1 représente un système d'administration 10 d'un système informatique 11. L'exemple qui suit se rapporte au système d'administration et de sécurité connu sous le nom de marque déposée OpenMaster du demandeur. Sa conception est conforme aux normes ISO de l'administration de systèmes et réseaux. Dans ces conditions, les termes utilisés seront conformes à cette norme, qui sont de langue anglaise, notamment les sigles et acronymes. D'autre part, les verbes "administrer" et "gérer" et leurs dérivés qui seront employés ici traduisent tous deux indifféremment le verbe anglais "manage" et ses dérivés. L'homme du métier connaît bien ces normes. Compte tenu de leur masse informative, on ne donnera ici que les éléments nécessaires à la compréhension de l'invention.

Le système informatique illustré 11 est distribué et se compose de machines 12, en l'occurrence cinq machines 12a-12e, organisées en un ou plusieurs réseaux 13. Dans l'exemple illustré, le réseau 13 comprend un réseau 13a de la Toile (réseau internet) et un réseau 13b autre que la Toile. Le réseau 13b utilise le protocole SNMP (System Network Management Protocol) dans l'exemple illustré. Plus généralement, seule la Toile 13a peut suffire, étant donné que l'invention est plus particulièrement adaptée à la Toile.

Une machine est une unité conceptuelle très large, de nature matérielle et logicielle, pouvant être les moyens impliqués pour exécuter une application donnée, des moyens pour exécuter une fonction donnée, un ordinateur, ainsi qu'un système informatique dans une architecture à systèmes en cascade. Les machines 12 peuvent être donc très diverses, telles que stations de travail, serveurs, routeurs, machines spécialisées et passerelles entre réseaux.

Le système informatique 11 est ordinairement un système comprenant plusieurs processeurs 14, un processeur 14 étant par exemple illustré dans chaque machine 12, des moyens de mémoire 15 pour contenir les logiciels et les données du système, et des moyens d'entrée-sortie 16 servant pour la communication entre machines par l'intermédiaire du réseau 13 (13a, 13b) à l'aide de protocoles divers, ainsi que pour une ou plusieurs communications extérieures, par exemple pour l'impression, la télécopie, etc. Un tel système peut par exemple gérer des données à distance, distribuer des données dans le cas d'un système de réservation, commander l'exécution de programmes à distance sur des machines spécialisées, partager localement des ressources physiques ou logicielles, et communiquer. Plus généralement, le système 11 se compose de ressources matérielles et/ou logicielles, réelles ou virtuelles, telles que machines, imprimantes, circuits virtuels, réseaux et applications. Le système d'administration 10 utilise au moins l'une de ces ressources selon une technologie orientée objets, bien connue de l'homme du métier.

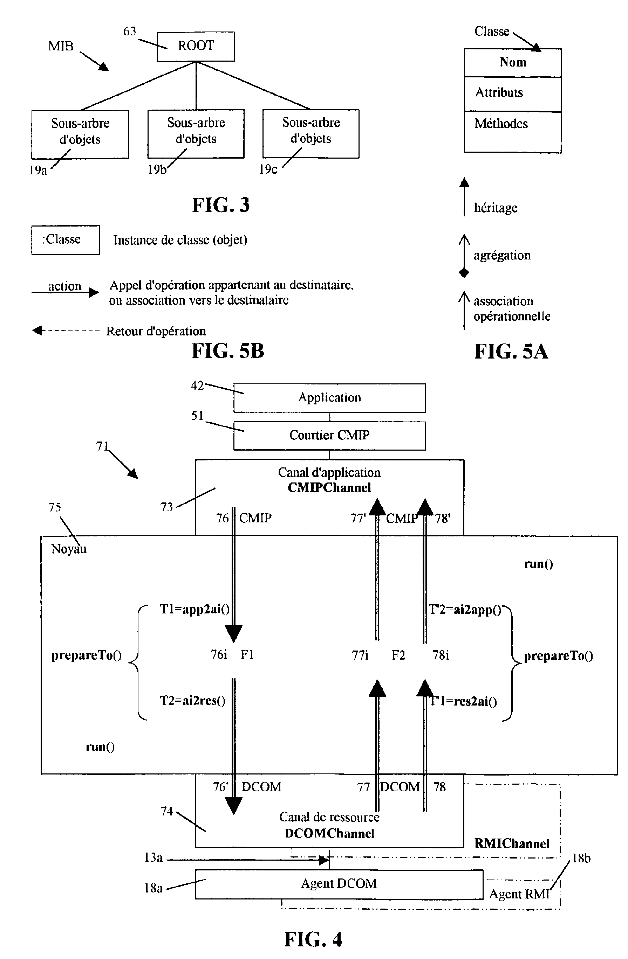

Le système d'administration 10 choisi a une architecture de type client-serveur. La partie serveur est gestionnaire et la partie cliente comprend la ou les ressources à gérer. Dans l'exemple illustré, la partie serveur comprend deux gestionnaires 17a, 17b inclus dans les machines 12a et 12b, dites machines gestionnaires, tandis que la partie cliente comprend trois agents 18a-18c permettant l'accès aux ressources à gérer incluses dans les machines respectives 12c-12e, dites machines gérées. Selon une option courante et avantageuse du système d'administration 10, un gestionnaire 17a gère aussi la machine gestionnaire 12a correspondante ou gère tout ou partie des machines gestionnaires. Cela peut se faire de façon similaire à celle illustrée, plus ou moins adaptée à cette option. L'exemple illustré offre le double avantage de faciliter la lecture des dessins tout en permettant à l'homme du métier de faire une généralisation du système décrit et illustré. Les agents 18 sont des interfaces servant à la gestion des objets dans des sous-arbres respectifs 19(19a-19c) en utilisant des protocoles respectifs. Pour des raisons de simplification de la description et des dessins, les trois machines gérées 12c-12e sont, dans l'exemple illustré dans les figures 1 et 3, pourvues de trois agents 18a-18c utilisant trois protocoles respectifs différents. Les deux agents 18a et 18b utilisent deux protocoles différents Pa et Pb d'au moins une ressource représentée selon une base technologique commune B, en l'occurrence le modèle CIM, tandis que l'agent 18c utilise le protocole SNMP. Les agents CIM 18a et 18b sont connectés au réseau internet 13a et sont connus sous le nom d'agents WBEM (Web-Based Enterprise Managment) tandis que l'agent SNMP 18c est connecté au réseau classique 13b. Les deux types d'agents WBEM connus actuellement sont l'agent WMI (Windows Management Instrumentation) de la société Microsoft, équipant ses systèmes d'exploitation Windows 98® et Windows NT®, et l'agent CIMOM (CIM Object Manager) de la société Sun Microsystems, prévu pour les systèmes d'exploitation Solaris® et AIX® notamment. L'agent WMI comprend un service de gestion d'objets utilisant une interface de programmation d'application, aussi connue sous le nom d'interface API (Application Programming Interface), nommée DCOM (Distributed Component Object Model) et écrite en langage C++, tandis que l'agent CIMOM utilise une interface API nommée RMI (Remote Method Invocation) en langage Java®.

L'état actuel du modèle CIM peut se résumer comme suit. C'est un modèle conceptuel de données, orienté objets, pour définir les données à administrer dans tout type d'implantation, matériel et/ou logiciel. Il permet l'échange bidirectionnel d'informations entre des plates-formes d'administration distribuées et des applications. La norme est actuellement composée de deux parties : le schéma CIM et les spécifications CIM. Le schéma CIM contient les descriptions du modèle actuel. Il est composé d'un ensemble de classes contenant propriétés et méthodes aptes à définir une plate-forme (framework) conceptuel avec laquelle des informations en environnement d'administration peuvent être organisées. Le schéma CIM est lui-même découpé en trois niveaux distincts : le schéma de corps (core schema), qui est un modèle d'information contenant les notions applicables à tous les domaines d'administration ; le schéma commun (common schema), qui est un modèle d'information contenant les notions communes à chaque domaine d'administration mais indépendante de la technologie utilisée (par exemple les notions de systèmes d'exploitation, d'applications, de réseaux, etc.), ce modèle étant suffisamment précis pour fournir une base pour le développement d'applications d'administration ; et les schémas d'extension (extension schemas), qui représentent les extensions spécifiques aux technologies utilisées en complément du schéma commun et qui sont spécifiques aux environnements tels que les systèmes d'exploitation. La définition formelle est exprimée dans un fichier MOF (Managed Object Format), qui est un fichier texte (ASCII par exemple) pouvant être importé (ou compilé) ou exporté par l'agent (CIMOM par exemple). Il est à noter qu'une représentation en langage XML (eXtensible Markup Language) de ce format a été défini par le consortium DMTF. Par conséquent, le format MOF est pris comme exemple actuel non limitatif. Les spécifications CIM décrivent le langage MOF (Managed Object Format), le nommage des instances (instance naming) et ce qui est appelé le métaschéma CIM. Le métaschéma CIM est une définition formelle du modèle. Il définit les termes utilisés pour formuler le modèle, leurs usages et leur sémantique. L'instanciation des objets gérés est faite actuellement sous forme d'une arborescence équivalente aux répertoires, nommée NameSpace. Cette présentation a simplement pour but de mieux comprendre l'exemple illustré et n'est aucunement limitatif.

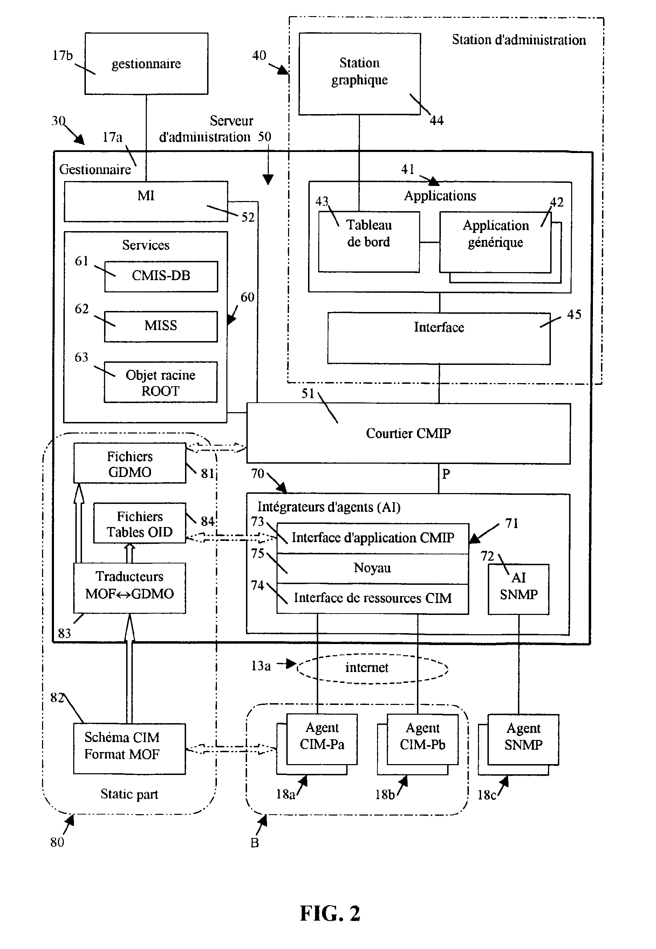

La figure 2 illustre la structure d'une plate-forme d'administration 30 du système d'administration 10. La plate-forme 30 peut être limitée à une machine gestionnaire ou être distribuée parmi plusieurs machines gestionnaires. Pour des raisons de commodité, la plate-forme illustrée dans la figure 2 sera limitée à la machine gestionnaire 12a et correspond ainsi au gestionnaire 17a. La plate-forme 30 se compose de deux ensembles 40 et 50. L'ensemble 40 contient un bloc 41 contenant un ensemble d'applications génériques (core applications) 42 connectées à un tableau de bord 43. Les applications peuvent être écrites dans un plusieurs langages, le langage SML étant le langage choisi. Le tableau de bord 43 est classique et inclut une partie graphique et un lanceur de requêtes. Une station graphique 44, extérieure à la plate-forme 30, permet de visualiser les applications, lancer les requêtes et visualiser les résultats contenus dans les réponses. Elle permet à un utilisateur de se connecter à la machine 12a pour démarrer et arrêter comme il le désire ses propres copies des applications 42. L'ensemble 40 comporte des moyens 45 d'interface. L'ensemble 40 peut former une unité autonome délimitée par un trait fantôme et constituer une station d'administration.

Dans le cas où l'ensemble 40 constitue une station d'administration, l'ensemble 50 forme un serveur d'administration. Dans l'exemple illustré, le serveur 50 utilise un seul protocole P donné, ici le protocole CMIP. Il comprend quatre blocs fonctionnels : un bloc de communication 51 aussi appelé courtier CMIP ou distributeur CMIS (CMIS Dispatcher) ; un bloc 52 intégrateur de gestionnaire(s) MI (Manager Integrator) en liaison avec au moins un autre gestionnaire, ici le gestionnaire 17b, et/ou avec un supra-gestionnaire ; un bloc 60 de services ; et un bloc 70 de deux intégrateurs 71 et 72 reliés respectivement aux agents CIM 18a, 18b et aux agents SNMP 18c par l'intermédiaire du réseau internet 13a et du réseau 13b. Le courtier 51 est connecté aux moyens d'interface 45 de la station 40 pour traiter les requêtes sous le protocole CMIP, au bloc MI 52, au bloc 60 des services et au bloc 70 d'intégrateurs d'agents. Le bloc 60 contient tous les services communs aux applications 42, notamment : une base CMIS-DB 61 de données CMIS ; un service 62 de schémas d'informations d'administration, appelé MISS (Management Information schema Service) contenant les schémas, aussi dits classes ou modèles, des objets gérés par la plate-forme ; et un service 63 de gestion d'objets sous la racine ROOT à laquelle sont attachés tous les objets gérés. La figure 2 illustre aussi plusieurs ensembles d'agents 18a-18c extérieurs à la plate-forme 30, pour indiquer qu'en pratique les agents CIM 18a et 18b gèrent des objets distribués dans le système informatique et les agents SNMP 18c peuvent se trouver dans plusieurs machines 12 du système informatique 11, une machine pouvant incorporer plusieurs agents utilisant des protocoles différents.

La figure 3 illustre de façon schématique et très partielle un exemple de structure d'une base MIB des objets gérés par le système d'administration 10 et représentative de ressources du système informatique 11. Dans l'exemple choisi, les ressources du système informatique 11 sont converties en classes d'objets organisées hiérarchiquement dans une base d'informations d'administration MIB (Management Information Base). Cette base n'est pas une base de données proprement dite, mais est assimilable à un catalogue de caractéristiques puisqu'elle contient la description et le contenu de toutes les classes gérées par le système d'administration 10. L'organisation des classes dans l'exemple choisi du système d'administration 10 est hiérarchique. On distingue entre l'arbre des classes, une classe étant définie en subordination à une ou plusieurs classes mères, et l'arbre des instances, une instance étant attachée à une ou plusieurs instances mères. L'arbre des classes est contenu dans le service MISS 62, tandis que l'arbre des instances est l'arbre correspondant à la base MIB telle que représentée sur la figure 3. Une classe est définie par des caractéristiques nommées attributs, tels qu'un nom d'un composant du système et un état d'impression. Un objet d'une classe sera appelé une instance de la classe. Dans la base MIB, les objets sont divisés en classes d'objets gérés, dites classes MOC (Managed Object Class). Un objet géré est une vue abstraite, définie pour les besoins de la gestion, d'une ressource logique ou physique d'un système. Chaque classe MOC représente un type donné desdits moyens du système 11. À chaque classe MOC peuvent être attachées une ou plusieurs instances d'objets gérés, appelées instances MOI (Managed Object Instance) et représentant des occurrences actuelles desdits moyens.

Tous les objets de la base MIB dans la figure 3 sont placés sous la racine ROOT et sont répartis en sous-MIB. La racine ROOT est contenue dans le service 63 et les racines des sous-MIB seront appelées sous-racines correspondant au terme anglais Rootlet. Ainsi, toute application 42 devant traiter un objet de la base MIB s'adresse au service 63 pour accéder à l'objet. La figure 3 illustre trois sous-MIB représentatives des trois machines gérées 12c,12d et 12e et correspondant aux trois sous-arbres respectifs 19a-19c. Sous la racine ROOT de la base MIB est aussi attachée une sous-racine (non illustrée) pour chaque service du bloc 60. Dans ce bloc, le service CMIS-DB 61 fournit une base de données des objets gérés MOI destinée à leur persistance une fois que le gestionnaire a été mis hors fonctionnement. Il supporte toutes les classes MOC des services CMIS qui sont stockées localement dans une base de données. En outre, il fournit un ensemble de services ou fonctions de base, appelées aussi primitives, disponibles pour toutes les applications. Ces fonctions sont bien adaptées à la structure hiérarchique de la base MIB. Elles incluent notamment les fonctions : M-GET pour lire une ou plusieurs instances, M-SET pour mettre à jour une ou plusieurs instances, M-CREATE pour créer une instance, M-DELETE pour supprimer une instance, M-ACTION pour activer une opération spécifique sur une ou plusieurs instances et M-EVENT pour envoyer un événement.

Une instance dans la base MIB a un nom distinctif relatif RDN (Relative Distinguished Name) sous forme d'une liste d'assertions sur valeur d'attribut appelées assertions AVA (Attribute Value Assertion). Chaque assertion AVA est un couple < attribut de nommage > < valeur > , l'attribut de nommage étant celui qui, dans la classe, permet l'identification unique d'une instance par rapport à son instance mère. Dans un gestionnaire 17a de l'exemple illustré, un nom RDN est composé d'une seule assertion AVA, donc d'un seul couple < attribut de nommage > < valeur >, D'une manière générale, il est cependant possible qu'un nom distinctif RDN ait plusieurs assertions AVA. Chaque instance dans la base MIB est identifiée de façon unique par son nom distinctif DN (Distinguished Name), qui est la suite des noms RDN sur le chemin entre la racine et l'instance dans l'arbre des instances. Un sous-arbre d'une instance correspond à l'ensemble formé par l'instance elle-même et les instances qui lui sont subordonnées dans l'arbre des instances.

Les intégrateurs 71 et 72 sont des interfaces contenues dans la plate-forme 30 et appelées ordinairement par le sigle AI (Agent Integrator), pour communiquer avec les interfaces de ressources gérées, constituées par les agents 18a-18c. Dans la technique antérieure, il existait autant d'intégrateurs que de protocoles utilisés par les agents 18. Ainsi, l'intégrateur 72 illustré dans la figure 2 est destiné aux agents SNMP 18c du système informatique 11. Il faudrait donc autant d'intégrateurs pour les protocoles des objets gérés du modèle CIM, à savoir deux intégrateurs différents pour les protocoles respectifs Pa et Pb illustrés.

La solution de l'invention consiste à utiliser un seul intégrateur 71 pour des agents CIM utilisant des protocoles différents. Cet intégrateur WBEM fonctionne donc comme un multiplexeur. L'intégrateur 71 illustré est commun aux agents CIM-Pa 18a et CIM-Pb 18b correspondant aux protocoles existants précités. On verra qu'il est aussi adapté à tout protocole à venir pour des objets du modèle CIM. La figure 2 illustre un exemple de structure de l'intégrateur 71, qui comprend une interface 73 pour au moins une des applications 42 du bloc 41, une interface 74 pour au moins une ressource représentée selon une base technologique commune B, en l'occurrence le modèle CIM, par l'intermédiaire des agents 18a et 18b, et un noyau 75 de gestion WBEM.

La figure 4 est une vue schématique des composants servant à illustrer un exemple de la solution. Elle illustre d'abord la structure et le fonctionnement de l'intégrateur 71 choisi comme exemple de réalisation préféré et réalisé de l'invention. La figure 4 illustre également une application 42, le courtier CMIP 51, un agent CIM 18a communiquant selon le protocole DCOM pris comme protocole Pa et, en trait fantôme, un agent 18b communiquant selon le protocole RMI pris comme exemple de protocole Pb. Les traits fantômes indiquent que le même procédé s'applique pour les deux protocoles. L'illustration portera seulement sur le protocole DCOM. Comme les agents 18a et 18b sont des gestionnaires intelligents de ressources, l'intégrateur 71 de l'exemple choisi est construit selon le mode dit « sans état » (stateless), en ce sens que son corps 75 ne nécessite pas l'implantation d'un arbre d'instances intermédiaires. La gestion des instances est donc déléguée aux agents 18a et 18b.

L'intégrateur 71 permet le routage d'une requête 76 émise par une application 42 à destination d'au moins un agent CIM 18a et/ou 18b et le routage de la réponse éventuelle 77 émise par l'agent sollicité, ainsi que le routage d'une notification 78 émise par un agent CIM à destination du serveur 50. L'intégrateur 71 illustré a des moyens dynamiques (73, 74, 75) pour effectuer une communication bidirectionnelle entre le serveur d'administration 50 et les ressources gérées 12c et 12d. Il utilise des moyens statiques 80 qui sont illustrés en trait fantôme dans la figure 2 en parallèle avec l'intégrateur 71 et étendus à la partie des agents CIM 18a et 18b afin de faciliter la compréhension de leur fonctionnement. Les moyens statiques 80 sont mis en correspondance avec des moyens respectifs de la plate-forme 30 et des agents CIM 18a et 18b par des flèches en trait fantôme et ne sont pas nécessairement contenus dans les moyens dynamiques qui leur correspondent. Les moyens statiques illustrés 80 incluent : des fichiers 81 en langage GDMO, associés au courtier CMIP 51 et contenus dans le serveur d'administration 50 ; des fichiers 82 au format MOF, contenus dans les ressources gérées 12c et 12d dans le modèle CIM et associées aux agents CIM 18a et 18b ; et un traducteur 83 de MOF vers GDMO, connecté aux fichiers MOF 82 pour les convertir et fournir des fichiers GDMO 81. Le traducteur unidirectionnel MOF/GDMO 83 permet de donner aux applications 42 une représentation GDMO des données CIM à administrer. Le fichier résultant d'une traduction est compilé dans un compilateur, tel que celui connu sous le nom « gdmoc » dans le produit OpenMaster. L'intégrateur 71 étant sans état, des informations GDMO et CIM sont recherchées pour la traduction des requêtes. En outre, le format MOF étant normalisé, la traduction MOF/GDMO est indépendante à priori de l'implantation de la partie dynamique de l'intégrateur 71.

Du point de vue de la représentation des données, le modèle CIM peut être considéré comme plus restrictif que le modèle GDMO. Par contre, le modèle CIM permet une représentation des instances. La partie la plus délicate de la traduction entre ces deux modèles est le nommage des instances MOI des objets gérés. Deux parties sont générées par le traducteur 83 à partir d'un fichier MOF 82 : au moins un fichier 81, un fichier de texte notamment, en langage GDMO contenant l'ensemble des définitions des objets gérés, ce fichier étant utilisé par le serveur 50 et les applications 42 de la station 40 ; et au moins un fichier 84, un fichier de texte notamment, contenant entre autres des listes de conversions entre les noms au format MOF des objets gérés et leurs identifiants OID (Object IDentifier) en langage GDMO. On a vu que la représentation des objets gérés peut être faite en un format ou langage autre que MOF, tel que par exemple le langage XML. En partant d'un fichier XML, on peut prendre un traducteur XML/MOF existant, défini par DMTF, correspondant au fichier « xmlmof.xsl ».

Les fichiers 84 sont utilisés par l'intégrateur 71 pour la traduction des requêtes 76. Plusieurs tables de correspondance sont générées dans des fichiers 84 pour servir à la traduction "simultanée" des requêtes 76, des réponses 77 et des notifications 78, à savoir : une table de correspondance entre les noms des classes au format MOF et les identifiants OID en langage GDMO des classes générées ; une table de correspondance entre les noms des attributs au format MOF et les attributs associés "AttributeID" en GDMO ; une table de correspondance entre le nom d'une classe au format MOF et l'identifiant OID en GDMO du lien de nommage "NameBinding" associé à l'attribut NameBinding de la classe "Top" représentative de la classe mère de toutes les classes GDMO. Pour le nommage des instances, il existe une table de correspondance entre les noms des classes du format MOF et la liste des attributs clés servant au nommage des instances de la classe pour la construction du nom distinctif. La génération des tables des identifiants OID des objets est propre à l'implantation de l'intégrateur 71 mais reste indépendante des technologies CIM utilisées.

Pour la gestion de la sous-MIB représentative des ressources CIM gérées, l'intégrateur 71 utilise : un fichier GDMO 81 définissant au moins une classe, qui sera appelée "WBEMSystem" dans le produit OpenMaster du demandeur et qui dérive directement de la classe Top et constitue la classe mère de toutes les classes GDMO qui décrivent une ressource CIM ; et un lien de nommage associé au fichier précédent, servant à l'enregistrement de sous-racines (rootlets). Il définit aussi un attribut par type d'attribut supporté par le format CIM, par exemple sous la forme suivante :

| Type GDMO | Type CIM | |
|---|---|---|
| VisibleString | pour | string et datetime |
| Integer | pour | uint* et sint* |
| Real | pour | real* |
| Boolean | pour | boolean |
| ObjectInstance | pour | reference (URL form) |
| (où * vaut 16, 32 ou 64) | | |

Un exemple est donné dans les annexes 1 à 4. D'une manière générale, toutes les annexes font partie intégrante de la description. Le logiciel contenu dans chacune des annexes est la création du demandeur et est protégé par le droit d'auteur. Selon cet exemple, un fichier GDMO 81 nommé "wbemSystem.gdmo" et décrit dans l'annexe 1 contient un module de la base MIB de l'intégrateur WBEM 71. Tous les attributs des classes générées dérivent donc de ceux définis dans le fichier précédent. D'autre part, un exemple est donné à l'annexe 2 d'un fichier MOF nommé "win32.mof" et contenant un schéma CIM d'objets à gérer. A son lancement, l'intégrateur 71 récupère de manière statique les informations qui sont nécessaires à la traduction dynamique bidirectionnelle entre MOF et GDMO, telles que des tables des identifiants OID, des attributs de nommage, etc., c'est à dire tout ce qui permet de traduire les requêtes 76 de protocole CMIP en requêtes 76' au format CIM, et inversement les réponses CIM 77 en réponses CMIP 77', ainsi que les notifications CIM 78 en notifications CMIP 78'. L'intégrateur n'a pas besoin de connaître à priori les instances définies dans le fichier MOF. L'annexe 3 présente un exemple de fichier en GDMO nommé "cimDataFile.gdmo", correspondant au schéma CIM de l'annexe 2 tandis que l'annexe 4 présente un exemple de fichier de texte nommé "cimDataFile.oid", contenant les tables de correspondance entre noms au format MOF et identifiants OID en GDMO et provenant du schéma CIM de l'annexe 2.

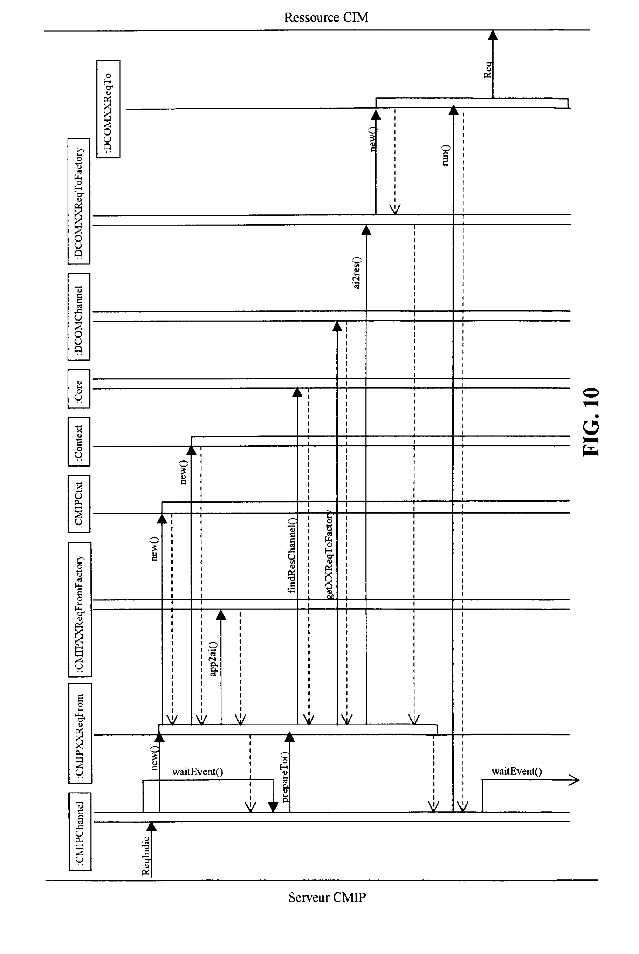

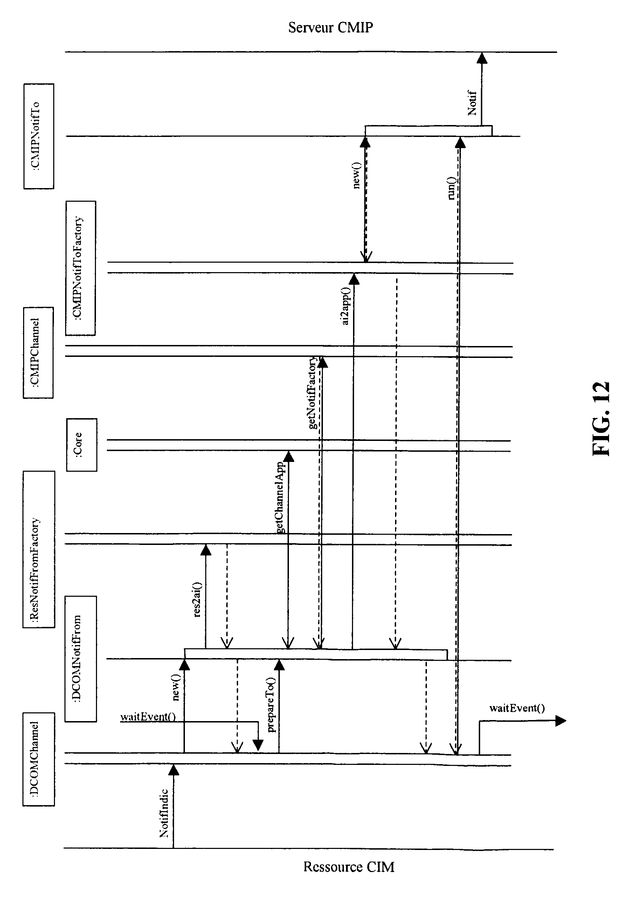

Les figures 4 à 12 illustrent un exemple de mise en oeuvre d'un intégrateur 71 d'agents CIM 18a, 18b utilisant au moins deux protocoles différents Pa et Pb. Cet exemple se fonde sur le langage UML. Par conséquent, le texte de la description qui suit utilise la syntaxe de ce langage et les figures 4 à 10 présentent des diagrammes simplifiés définis par ce langage.

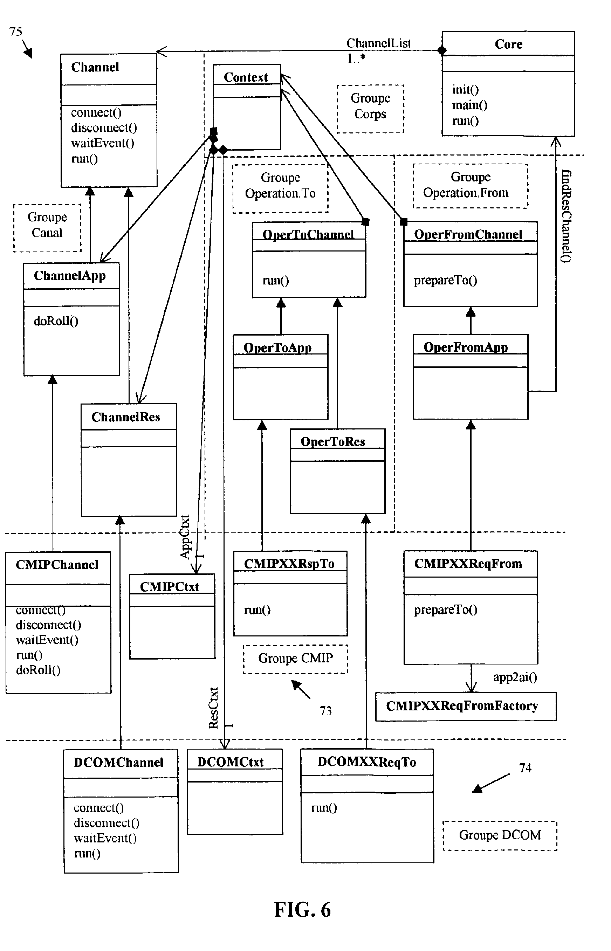

La figure 5A est une vue schématique indiquant les symboles employés dans les figures 6-8 et leur signification. Une classe est représentée symboliquement par un rectangle à trois parties, la partie haute désignant le nom de la classe, la partie intermédiaire incorporant les attributs de la classe et la partie basse incorporant les méthodes de la classe. Un héritage est symbolisé par une flèche à pointe noire, une agrégation par une flèche simple à empennage carré et une association opérationnelle par une flèche simple sans empennage. Le groupe OMG précité donne les définitions suivantes. Un héritage se rattache à la notion de généralisation. Une généralisation est une relation taxonomique entre un élément plus général et un élément plus spécifique. L'élément plus spécifique est entièrement cohérent avec l'élément plus général et contient une information additionnelle. Une instance de l'élément plus spécifique peut être utilisée dans le cas où l'élément plus général est permis. Un héritage est le mécanisme par lequel des éléments plus spécifiques incorporent une structure et un comportement d'éléments plus généraux rattachés par le comportement. L'héritage de classe sert notamment pour la factorisation des méthodes et des attributs (parties communes). Une agrégation est une forme spéciale d'association qui définit une relation tout-partie ("a whole-part relationship") entre l'agrégat (le tout) et une partie composante. Une association opérationnelle est un lien entre deux ou plusieurs classeurs, qui définit des connexions entre leurs instances. Le groupement (en anglais : package) est un mécanisme passe-partout pour organiser des éléments en groupes. Des groupes (packages) peuvent s'emboîter dans d'autres groupes. Le groupement sert notamment à organiser une hiérarchie ou faire un regroupement, dans le cas présent des protocoles issus de technologies CIM différents et indépendantes. La surcharge (overload) est une action consistant à redéfinir un opérateur ou une fonction, pour une utilisation différente. La surcharge des méthodes sera utilisée pour permettre un accès centralisé à des implantations différentes.

Les figures 6, 7 et 8 indiquent les classes utilisées par le procédé de l'invention. Le procédé se fonde sur des concepts nommés et définis comme suit :
- **« Core »** :: corps principal de programme.
- **« Channel »** :: canal entre l'intégrateur 71 et l'application 42 ou entre l'intégrateur et la ressource 12 (12c, 12d) par l'intermédiaire des agents CIM 18 (18a, 18b).
- **« Operation »** :: opération équivalant à une requête, une réponse ou une notification, qui est reçue ou à émettre.
- **« Context »** :: contexte formé par les informations stockées pendant les traductions des Opérations.

Les concepts **« Core» , « Context »** et **« Channel »** sont concrétisés par des classes du même nom, les concepts « **Channel** » et « **Operation** » étant aussi concrétisées par des classes spécifiques.

Plus précisément, la classe **Core** est le corps principal du programme relatif au procédé. Ce corps lance les instances des différentes classes configurées **Channel**. Il enregistre également les informations de conversion nécessaires à la traduction des requêtes, des réponses et des notifications. La classe possède au minimum les méthodes nommées et définies comme suit :
- **init()** :: création et lancement des canaux.
- **main()** :: point d'entrée du programme exécutable.
- **end()** :: destruction des canaux et fin de l'exécution de l'intégrateur 71.

Un intégrateur peut être considéré comme un routeur entre le serveur 50 et les agents 18a, 18b d'administration de ressources via le réseau internet 13a. Un canal, défini par une instance de la classe Channel, permet notamment la gestion de connexion ou de déconnexion entre l'intégrateur 71 et le serveur 50 et entre l'intégrateur 71 et au moins un agent CIM 18a, 18b. Les canaux possèdent tous au minimum les méthodes suivantes :
- **connect()** :: connexion avec le courtier 51 ou à un agent CIM,
- **disconnect()** :: déconnexion avec le courtier 51 ou à un agent CIM,
- **waitEvent()** :: attente d'une opération à traduire,
- **run()** :: boucle principale du canal .

Il existe deux types de canaux :
- au moins un canal de type application **ChannelApp** entre l'intégrateur et une application 42 via le courtier 51. Dans l'exemple illustré, ce canal est défini par la sous-classe **CMIPChannel**. Le canal d'application est en attente d'une requête CMIP 76 du courtier 51. Il contient au minimum la méthode suivante :
   - **doRoll()** :: notification d'ajout ou de retrait d'une sous-racine (rootlet) pour le courtier 51 ; et
- des canaux de type ressource **ChannelRes** entre l'intégrateur et les agents CIM. Un canal de ressource correspond donc à une connexion à un agent CIM et est en attente d'une notification d'un agent CIM. Les canaux de ressource peuvent être eux-mêmes divisés en sous-classes par type de protocoles, en l'occurrence en deux sous-classes relatives aux deux protocoles respectifs Pa et Pb considérés, en l'occurrence les canaux de ressource **DCOMChannel** et **RMIChannel**.

La classe **Channel** est associée à une classe constructrice nommée **ChannelFactory**, dont le type est appelé "constructeur" et qui contient la méthode :
- **createChannel()** :: création paramétrée d'un canal géré par le corps **Core**.

La classe **Channel** est aussi associée à des constructeurs qui sont nécessaires aux traductions et émissions des requêtes, des réponses et des notifications et qui sont associés aux opérations.

Il est à noter que dans l'exemple illustré une requête d'entrée 76 subit une première traduction pour former une requête intermédiaire 76i en un premier format interne F1 de l'intégrateur 71, puis une seconde traduction pour former une requête finale 76' au format du canal de ressource CIM selon le protocole Pa ou Pb. De même, une réponse 77 et une notification 78 sont respectivement traduites en une réponse intermédiaire 77i et une notification intermédiaire 78i en un second format interne F2 pour obtenir une réponse finale 77' et une notification finale 78' au format du serveur 50. Dans l'exemple choisi, le premier format interne F1 pour les requêtes est le format WBEM SQL, proche du format ANSI SQL, tandis que le second format F2 est le format MOF. Dans cet exemple, le format F2 est le format MOF de la ressource CIM prise comme exemple. Cependant, le format ou langage F2 pourrait servir d'intermédiaire pour un autre format ou langage de la ressource tel que XML ou Java. Il en est de même dans l'autre sens. La double traduction offre l'avantage de donner une indépendance totale entre l'entrée et la sortie de l'intégrateur 71. Ainsi, une requête 76 est traduite dans l'intégrateur 71 indépendamment du protocole du canal de ressource du type de channel ressource et, inversement, une réponse 77 et une notification 78 sont traduites indépendamment du protocole utilisé par le serveur 50. La double traduction faite dans l'intégrateur correspond à une traduction faite au niveau des deux groupes relatifs aux protocoles d'entrée et de sortie et évite ainsi toute dépendance entre groupes.

Les constructeurs d'opérations sont les classes permettant la création et les traductions d'une requête, d'une réponse et d'une notification correspondante pour passer d'une canal amont en un canal aval de l'intégrateur. Les classes constructrices sont les suivantes :
- **OperToResFactory** : constructeur associé à l'opération **OperToRes** et dont les sous-classes possèdent toutes au minimum la méthode suivante :
   **ai2res()** : traduction d'une requête intermédiaire 76i en une requête finale 76'.
- **OperToAppFactory** : constructeur associé à l'opération **OperToApp**, dont les sous classes possèdent toutes au minimum la méthode suivante :
   **ai2app()** : traduction d'une réponse intermédiaire 77i ou d'une notification intermédiaire 78i en une réponse finale 77' ou notification finale 78'.
- **OperFromResFactory** : constructeur associé à l'opération **OperFromRes,** dont les sous classes possèdent toutes au minimum la méthode suivante :
   **res2ai()** : traduction d'une réponse d'entrée 77 ou d'une notification d'entrée 78 en une réponse intermédiaire 77i ou une notification intermédiaire.
- **OperFromAppFactory** : constructeur associé à l'opération OperFromApp, dont les sous classes possèdent toutes au minimum la méthode suivante :
   **app2ai()** : traduction d'une requête d'entrée 76 en une requête intermédiaire 76i.

Sachant que les requêtes CMIP mettant en oeuvre les services CMIS M-GET, M-SET, M-CREATE, M-DELETE, etc. correspondent à des requêtes de ressource équivalentes, une opération est définie comme une instance de l'une quelconque des classes **Operation** définies ci-après. Une opération permet la traduction et le transfert d'une requête, d'une réponse ou d'une notification provenant d'un canal d'un côté de l'intégrateur (courtier 51 ou ressource CIM) vers un autre canal de l'autre côté de l'intégrateur. Les Opérations comprennent les opérations réceptrices nommées **OperFromChannel** et les opérations émettrices nommées **OperToChannel**. C'est une combinaison de ces deux types d'opérations qui permet la traduction d'une requête ou d'une réponse d'entrée.

Les opérations réceptrices **OperFromChannel** possèdent toutes au minimum la méthode suivante :
**prepareTo()** : double traduction d'une opération reçue pour former une opération a émettre dans un canal, faite en utilisant les méthodes **ai2*()**, c'est-à-dire les méthodes des constructeurs dont les noms commencent par les termes "ai2", à savoir **ai2res**() et **ai2app**() définies précédemment.

Les opérations émettrices **OperToChannel** possèdent toutes au minimum la méthode suivante :
**run**() : émission d'une opération sur le canal courant.

Les opérations réceptrices **OperFromChannel** sont construites à partir des événements reçus par un canal tandis que les opérations émettrices **OperToChannel** sont les opérations traduites à partir des opérations réceptrices **OperFromChannel** et émises sur un canal.

Ces deux types d'opérations peuvent encore être divisés en deux selon que l'opération concerne une application 42 ou la ressource CIM :
- **OperFromApp** : opération venant de l'application. Elle est associée au constructeur **OperFromAppFactory** dont les sous-classes possèdent aussi toutes au minimum la méthode **app2ai**().
- **OperToApp** : opération vers l'application. Elle est associée au constructeur **OperToAppFactory** dont les sous-classes possèdent aussi toutes au minimum la méthode **ai2app**().
- **OperToRes** : opération vers la ressource. Elle est associée au constructeur **OperToResFactory** dont les sous-classes possèdent aussi toutes au minimum la méthode **ai2res**(). Et
- **OperFromRes** : opération venant de la ressource. Elle est associée au constructeur **OperFromResFactory** dont les sous-classes possèdent aussi toutes au minimum la méthode suivante **res2ai**().

Il existe aussi une classe de contexte **Context**. Un contexte contient : le contexte lié au canal d'application qui a reçu une requête 76, en l'occurrence un contexte CMIP ; le contexte lié à la requête -par exemple le contexte de la requête GetIndication, qui comprend InvokeID, ObjectClass, la liste des attributs etc.- ; et un contexte de ressource. Lors de la réception d'une requête 76, un contexte d'application est créé et transporté durant les deux traductions. Cette classe correspond donc à un mécanisme permettant d'avoir à tout moment des informations sur la requête en cours et, en retour, de construire rapidement une réponse finale 76'.

Dans l'exemple choisi et illustré, il est fait un traitement synchrone des requêtes 76 pour faciliter les développements du logiciel. En fait, ce traitement synchrone est surtout intéressant du côté de la ressource, du fait que l'appel d'une requête émise par la ressource est bloquant. Cependant, il n'est pas permis de bloquer les attentes d'événements. Donc, les méthodes **run**() des sous-classes de **Channel** et des sous-classes relatives aux opération sont traitées dans des tâches parallèles (multi-threading).

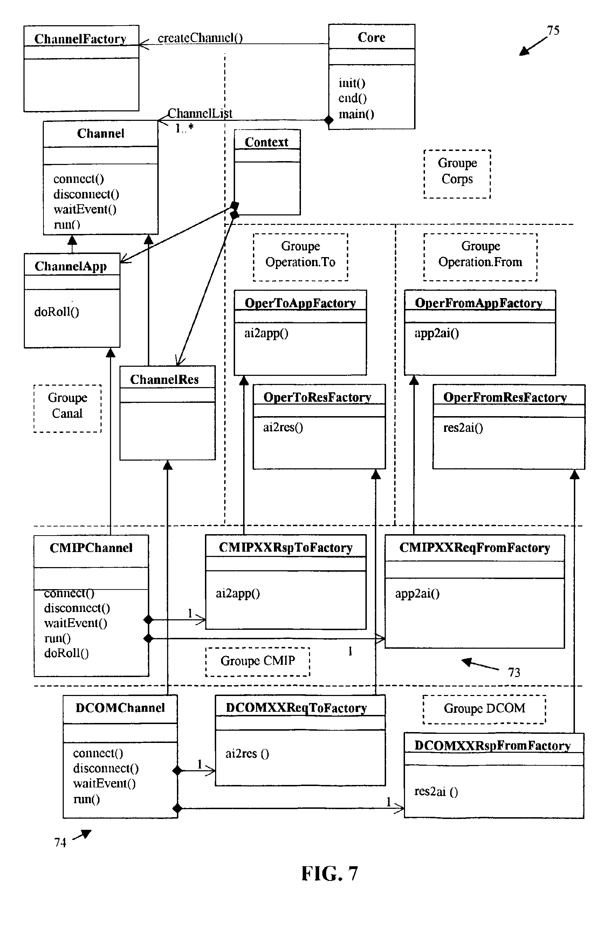

Les figures 6 et 7 illustrent, selon un diagramme UML simplifié et bien connu, un exemple de structure des classes impliquées par le traitement d'une requête CMIP 76 pour obtenir une requête finale 76'. La figure 6 se réfère à une requête 76 de contenu correspondant à au moins un service CMIS M-XX, avec XX = GET, SET, CREATE ou DELETE. Les classes de la figure 6 sont classées en trois groupes (packages) principaux : un groupe CMIP, un groupe CIM relatif à un protocole Pa, Pb de la ressource CIM distribuée dans les machines 12c et 12d, et un groupe Noyau. Dans les diagrammes, tout chiffre placé sous une flèche indiquant le nombre d'instances de la classe correspondante.

Le groupe Noyau comprend :
- un groupe Corps fait des classes **Core et Context** ;
- un groupe Canal fait de la classe **Channel** et de ses deux classes filles **Channel.App** et **Channel.Res**, la classe **Channel** étant agrégée à la classe **Core** par un de ses attributs nommé **ChannelList** relatif à une liste de canaux et ses deux filles étant agrégées à la classe **Context** ;
- un groupe de destination d'opération **Operation.To** fait de la classe **OperToChannel**, de laquelle est agrégée la classe **Context**, et des deux filles **OperToApp** et **OperToRes** ; et
- un groupe d'origine d'opération **Operation.From** fait de la classe **OperFromChannel**, de laquelle est agrégée la classe **Context**, et de sa fille **OperFromApp** associée à la classe **Core** par une méthode de recherche de canal de ressource **findResChannel**.

Le groupe CMIP comprend les classes suivantes :
- **CMIPChannel** relative à un canal d'application et héritant de la classe **ChannelApp**. Elle est pourvue au minimum de l'ensemble des méthodes des classes **Channel** et **ChannelApp** ;
- **CMIPCtxt** relative au contexte CMIP et agrégée à la classe Context par son attribut **ApplCtxt** relatif au contexte de l'application ;
- **CMIPXXRspTo** relative à la réponse finale 77' à la requête 76 de contenu XX. Elle hérite de la classe **OperToApp** et a au minimum la méthode **run**() ;
- **CMIPXXReqFrom** relative à la requête 76. Elle hérite de la classe **OperFromApp** et a au minimum la méthode **prepareTo**() ; et
- un constructeur **CMIPXXReqFromFactory** associé à la classe **CMIPXXReqFrom**.

Enfin, le groupe CIM et de protocole Pa, DCOM dans l'exemple illustré, comprend les classes suivantes :
- **DCOMChannel** relative à un canal de ressource CIM et héritant de la classe **ChannelRes.** Elle a au minimum les méthodes de la classe **Channel** ;
- **DCOMCtxt** relative au contexte CIM et agrégée à la classe **Context** par son attribut **ResCtxt** relatif au contexte de ressource ; et
- **DCOMXXReqTo** relative à la requête finale 76' et héritant de la classe **OperToRes**. Elle a au minimum la méthode **run**().

La figure 7 illustre un exemple de fabrication d'une requête finale 76' à partir d'une requête d'entrée 76. Elle comprend les mêmes groupes que dans la figure 6, qui incorporent les constructeurs nécessaires à la traduction.

Le groupe Noyau comprend :
- le groupe Corps fait des classes **Core** et **Context** ;
- le groupe Canal fait de la classe **Channel** et de ses deux classes filles **Channel.App** et **Channel.Res**, ainsi que du constructeur **ChannelFactory** associé par sa méthode **createChannel()** à la classe **Core** pour la création d'un canal. La classe **Channel** est agrégée à la classe **Core** par son attribut **ChannelList** relatif à une liste de canaux tandis que ses deux filles sont agrégées à la classe **Context** ;
- le groupe de destination d'opération **Operation.To** fait des constructeurs **OperToAppFactory** et **OperToResFactory** pourvus au moins des méthodes respectives **ai2app**() et **ai2res**() ; et
- le groupe d'origine d'opération **Operation**.From fait des constructeurs **OperFromAppFactory** et **OperFromResFactory** pourvus au moins des méthodes respectives **app2ai**() et **res2ai**().

Le groupe CMIP comprend la classe **CMIPChannel** et :
- le constructeur **CMIPXXRspToFactory** pourvu au minimum de la méthode **ai2app**() et héritant du constructeur **OperToAppFactory**. Il est agrégé à la classe **CMIPChannel** ; et
- le constructeur **CMIPXXReqFromFactory** pourvu au moins de la méthode **app2ai**() et héritant de la classe **OperFromAppFactory**
   Le groupe CIM comprend la classe **DCOMChannel** et des constructeurs **DCOMXXReqToFactory** et **DCOMXXRspFromFactory** pourvus au moins des méthodes respectives **ai2res**() et **res2ai**() et héritant des constructeurs respectifs **OperToResFactory** et **OperFromResFactory**. Ils sont tous deux agrégés à la classe **DCOMChannel**.

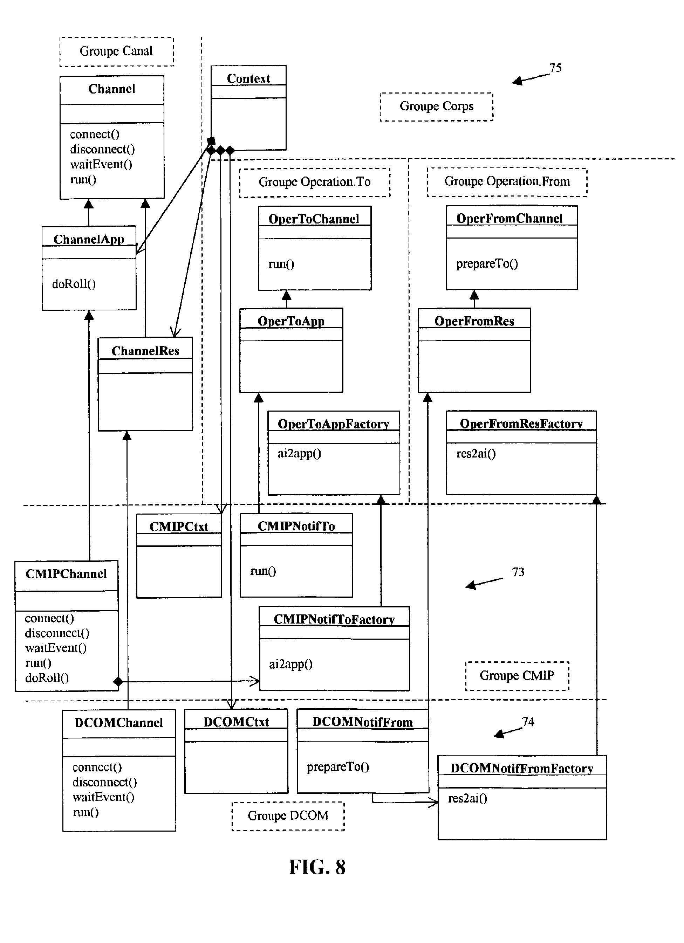

La figure 8 illustre un exemple de structure des classes utilisées pour obtenir une notification finale 78' à partir d'une notification d'entrée 78. Elle comprend les mêmes groupes que dans les figures 6 et 7, qui incorporent les constructeurs nécessaires à la traduction.

Le groupe Noyau comprend :
- le groupe Corps fait de la classe **Context** ;
- le groupe Canal fait de la classe **Channel** et de ses deux classes filles **Channel.App** et **Channel.Res** agrégées à la classe **Context** ;
- le groupe de destination d'opération **Operation.To** fait de la classe **OperToChannel**, de sa fille **OperToApp** et du constructeur **OperToAppFactory** pourvu au moins de la méthode **ai2app**() ; et
- le groupe d'origine d'opération **Operation.From** fait de la classe **OperFromChannel**, de sa fille **OperFromRes** et du constructeur **OperFromResFactory** pourvu au moins de la méthode **res2ai**().

Le groupe CMIP comprend, en plus des classes **CMIPChannel** et **CMIPCtxt** :
- la classe **CMIPNotifTo** relative à l'envoi de la notification finale 78', fille de la classe **OperToApp** et pourvue d'au moins la méthode **run**() ; et
- le constructeur **CMIPNotifToFactory** pourvu au minimum de la méthode **ai2app**() et héritant du constructeur **OperToAppFactory**. Il est agrégé à la classe **CMIPChannel** ; et

Enfin, le groupe CIM comprend, en plus des classes **DCOMChannel** et **DCOMCtxt** :
- la classe **DCOMNotifFrom** relative au traitement de la notification d'arrivée 78, fille de la classe **OperFromRes** et pourvue d'au moins la méthode **prepareTo**() ; et
- le constructeur **DCOMNotifFromFactory** pourvu d'au moins la méthode **res2ai**() et fils du constructeur **OperFromResFactory**. Il est associé à la classe **DCOMNotifFrom**.

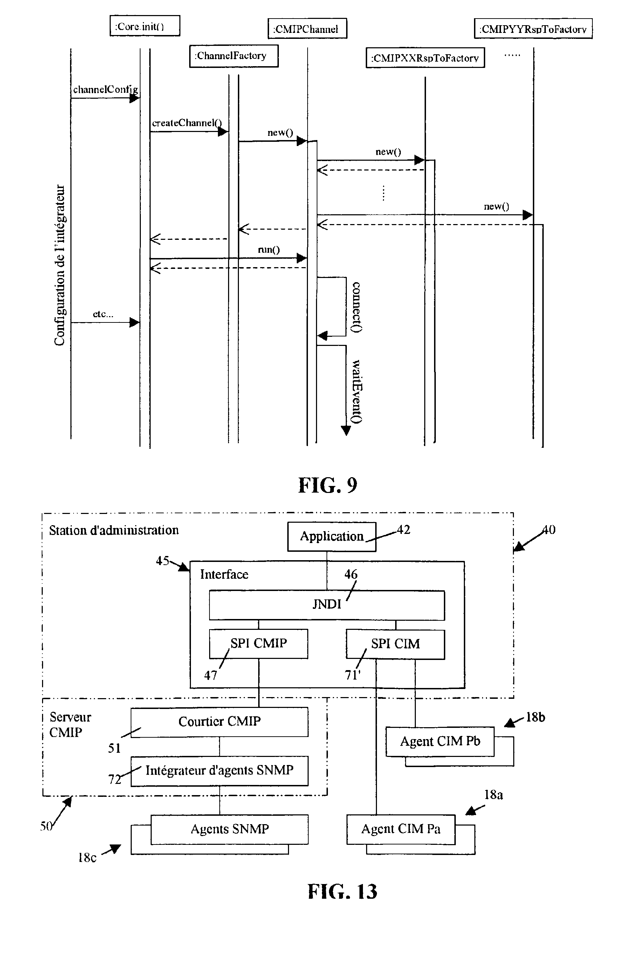

Les figures 9 à 12 sont des diagrammes de séquences représentés de façon simplifiée et bien connue en technologie UML sur la base des symboles indiqués à la figure 5B. Dans ces figures, chaque rectangle figurant en titre de colonne représente une instance de la classe ayant le nom contenu dans le rectangle. Une flèche à pointe noire représente une action pouvant être un appel d'opération appartenant à l'instance destinataire, ou une association vers le destinataire. Une flèche simple en trait discontinu représente un retour optionnel d'opération. Le fonctionnement de l'intégrateur 71 ressort clairement pour l'homme du métier à partir des diagrammes UML des figures 6 à 8 et des diagrammes de séquences des figures 9 à 12.

La figure 9 illustre un exemple de création d'un canal d'application **CMIPChannel**. Cet exemple permet de comprendre le fonctionnement général de la création d'un canal, qui va d'abord être exposé. Le procédé commence par le lancement de la classe **Core**. Une fois lancée, elle boucle au travers de sa méthode **init**() pour obtenir des informations de configuration d'un canal d'application ou de ressource. Plus précisément, l'instance de **Core** appelle la méthode **createChannel**() de la classe **ChannelFactory** et transmet à cette dernière des informations configurées **channelConfig** du canal à créer, de façon à préciser que la classe **Core** a récupéré la configuration. La méthode **createChannel**() crée une instance de **Channel** correspondant au canal demandé (canal d'application ou de ressource), dont le numéro est attribué par **Core** de son attribut **ChannelList**. L'instance de **Channel** permet de créer une instance de chaque constructeur d'opération lié à ce type de canal. Ensuite, l'instance de **Core** fait un appel asynchrone de la méthode **run**() de **Channel**, qui se lancera en parallèle. Le canal demandé est ainsi créé. En particulier, il apparaît de l'exemple de la figure 9 que la méthode **createChannel**() crée une instance de **CMIPChannel** relative au canal d'application désiré. Cette instance crée une instance du constructeur **CMIPXXRspToFactory** qui est agrégée à l'instance précédente. Le chiffre 1 indique la présence d'une seule instance du constructeur. La figure 9 indique aussi qu'une autre réponse à une requête YY se fait de la même façon. Le fonctionnement se poursuit pour créer le canal suivant, dans la configuration définie dans le fichier de configuration. Il est à noter que la boucle principale d'un canal d'application étant lancée, la méthode **WaitEvent**() le met en attente d'un événement suivant. L'annexe 5 illustre un exemple de boucle principale écrite sous forme simplifiée en langage Java.

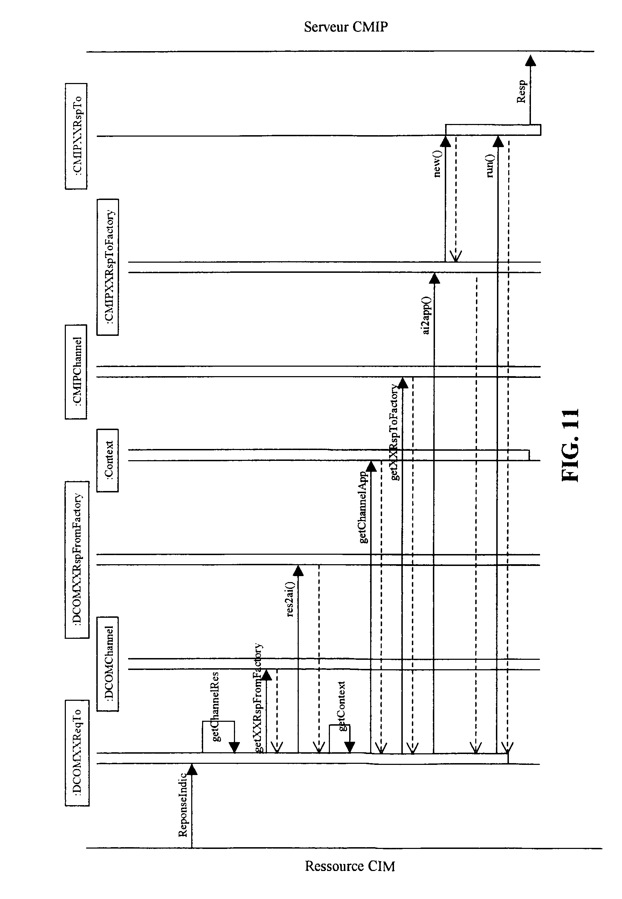

Les figures 4 et 6-11 permettent d'expliquer aisément le traitement d'une requête CMIP 76 arrivant sur le canal d'application **CMIPChannel**. Dès sa réception, la boucle principale du canal d'application construit une opération **CMIPXXReqFrom** sous-classe de **OperFromApp** correspondant à la requête. Lors de cette construction, la requête CMIP 76 est transformée en requête intermédiaire 76i en appliquant la méthode **app2ai**() de la classe du constructeur correspondant **CMIPXXReqFromFactory.** Une instance de cette classe est disponible à travers le canal **CMIPChannel**. Dans l'exemple choisi, on a vu que la requête intermédiaire 76i est traduite en langage WBEM SQL. En même temps un contexte est créé, contenant le canal d'application **ChannelApp** et un contexte d'application formé par la classe **CMIPCtxt**. Ce contexte est stocké dans l'opération **CMIPXXReqFrom**. Cette opération est ensuite traduite en une opération **DCOMXXReqTo**, sous-classe de **OperToRes**, en utilisant la méthode **prepareTo**() de **CMIPXXReqFrom**. Une recherche du canal de ressource **DCOMChannel** correspondant est faite par la classe **OperFromApp** en utilisant la méthode **FindResChannel**() de **Core**. Après l'avoir trouvé, la classe **OperFromApp** appelle la méthode **ai2res**() de **DCOMXXReqToFactory**, sous-classe de **OperToResFactory** associée au canal, pour transformer la requête intermédiaire 76i en une requête CIM 76' de protocole Pa (DCOM) choisi. La requête finale 76' est alors transmise au canal de ressource destinataire **DCOMChannel**, en exécutant la méthode asynchrone run() de la sous-classe **DCOMXXReqTo** de **OperToRes**. Cette sous-classe étant lancée, elle envoie son opération au canal de ressource associé. Si aucune réponse n'est attendue, l'opération est terminée. Sinon une réponse à l'opération est attendue de façon synchrone. La figure 11 se rapporte au cas où une réponse est attendue. Lorsqu'elle arrive, une instance de **CMIPXXRspTo**, sous-classe de **OperToApp** du canal d'application, est construite en utilisant la méthode **res2ai**() de la sous-classe **DCOMXXRspFromFactory** de la classe correspondante **OperFromResFactory**, en utilisant le contexte contenant le canal d'application **CMIPChannel** et un contexte d'application formé par la classe, et la méthode **ai2app**() de la sous-classe **CMIPXXRspToFactory** de la classe correspondante **OperToAppFactory**. Elle est envoyée au canal d'application en utilisant la méthode asynchrone **run**() de **CMIPXXRspTo**. Les annexes 6 et 7 illustrent deux exemples d'algorithmes relatifs à la méthode **prepareTo**() des opérations respectives **OperFromApp** et **OperFromRes**.

Les figures 4-8 et 12 illustrent un exemple de traitement d'une notification 78 arrivant, en tant qu'événement, sur le canal de ressource **DCOMChannel**. On a vu qu'auparavant la boucle principale d'un canal de ressource a été lancée. Dès lors, la boucle principale se met en attente de notifications. Aussitôt après la réception d'un événement, le canal de ressource se remet en position d'attente d'un autre événement. À la réception d'une notification, la boucle principale construit une opération **DCOMNotifFrom**, sous-classe de **OperFromRes**. La construction est faite en utilisant la méthode **res2ai**() de la classe constructeur associée **DCOMNotifFromFactory**, qui traduit la notification d'entrée 78 en une notification intermédiaire 78i au format F2. L'opération **DCOMNotifFrom** demande à **Core** l'attribution d'un canal d'application **CMIPChannel**. L'opération est aussi traduite en une sous-classe **CMIPNotifyTo** de **OperToApp**, en utilisant la méthode **prepareTo**() de la sous-classe de **OperFromRes**. La méthode **prepareTo**() appelle la méthode **ai2app**() de la sous-classe **CMIPNotifyToFactory** de **OperToAppFactory** pour transformer la notification intermédiaire 78i en une notification finale 78'. La notification est alors transmise au canal d'application destinataire, en exécutant la méthode asynchrone **run**() de la sous-classe de **OperToApp**.

La figure 13 illustre un exemple de variante d'application de la solution de l'invention. Dans l'exemple précédent, la solution s'applique à un intégrateur 71 d'agents CIM, l'intégrateur 71 étant connecté à une application 42 par l'intermédiaire du courtier CMIP 51. Dans l'exemple de la figure 13, la solution s'applique en amont du courtier 51, dans l'interface 45 de la station d'administration 40. L'interface 45 comprend une interface commune 46 permettant l'utilisation d'un seul langage avec toute application générique 42, en l'occurrence une interface connue sous le nom JNDI Java Naming Directory Interface) utilisant le langage Java®. Cette interface permet d'accéder de façon transparente, sous plusieurs protocoles, à des objets hétérogènes en les nommant d'une façon unique qui présente l'avantage d'être identique à celle utilisée par le langage GDMO du protocole CMIP de la plate-forme prise comme exemple. Cet accès commun est obtenu à l'aide de couches protocolaires connues sous le nom de couches SPI (Service Protocol Interface) et affectées respectivement aux protocoles des objets cibles hétérogènes. Dans l'exemple illustré dans la figure 13, une couche SPI 47 est affectée au protocole CMIP pour communiquer avec le courtier 51 du serveur 50. Le serveur 50 illustré n'utilise plus que l'intégrateur SNMP 72. L'interface 45 utilise aussi une couche SPI 71' adaptée au modèle CIM et incluant une structure fonctionnant de façon similaire à celle de l'intégrateur 71 qui vient d'être décrit. Le langage d'application est alors le langage Java® au lieu de GDMO dans l'exemple précédent et le protocole est Java RMI au lieu de CMIP. La couche SPI 71' est directement en liaison avec les agents CIM 18a et 18b.

La solution de l'invention peut recevoir d'autres variantes à la portée de l'homme du métier. On a vu par exemple qu'elle peut s'appliquer à d'autres représentations d'objets que le modèle CIM. D'autre part, le multiplexage pourrait se faire entre au moins deux protocoles d'entrée correspondant à deux applications ou groupes d'applications respectifs et au moins deux protocoles de sortie correspondant à au moins une ressource représentée selon une base technologique commune. En outre, il ressort aussi clairement de la description précédente que le procédé pourrait être adapté à la communication avec chacune de plusieurs bases technologiques communes.

De façon générale, l'invention a donc pour objet un procédé de communication sous plusieurs protocoles entre au moins une application 42 et au moins une ressource de système représentée selon une base technologique commune B, la communication se faisant avec conversion entre au moins un protocole d'application P et au moins deux protocoles de ressource Pa, Pb. Selon l'invention, le procédé fait en technologie orientée objets un multiplexage utilisant la base commune B. Le multiplexage utilise au moins une classe principale **Core** pour créer **init** au moins deux canaux respectifs avec l'application et au moins la ressource selon l'un des protocoles de ressource, au moins une classe **Channel** pour connecter et déconnecter au moins les deux canaux créés avec l'application et avec la ressource et pour attendre une opération, et au moins une classe d'opération **OperFromChannel**, **OperToChannel** pour établir une communication entre au moins les deux canaux et faire ladite conversion.

Selon une caractéristique accessoire et avantageuse, la conversion inclut deux traductions successives T1, T2, T'1, T'2, en passant par une forme intermédiaire F1, F2, entre le protocole d'application P et au moins l'un des protocoles de ressource Pa, Pb. Cette double traduction peut être dans l'un des deux sens ou être bidirectionnelle.

De même, la conversion inclut accessoirement et avantageusement l'association d'au moins ladite classe d'opération à au moins une classe constructrice **Factory**.

L'invention a pour premier objet corollaire un système d'administration 10 d'un système 11 incluant au moins une ressource représentée selon une base technologique commune B, le système d'administration ayant au moins une application 42 communiquant avec au moins ladite ressource par l'intermédiaire de moyens intégrateurs 71, 71' mettant en oeuvre le procédé défini précédemment.

Selon l'exemple décrit et illustré, les moyens intégrateurs 71 sont construits selon le mode "sans état" signifiant qu'ils ne nécessitent pas l'implantation d'un arbre d'instances intermédiaires. Cependant, l'homme du métier pourrait, à la lecture de la description précédente, adapter logiquement le procédé à des moyens intégrateurs construits selon un autre mode.

De même, les moyens intégrateurs 71 de l'exemple illustré comprennent des moyens dynamiques 73, 74, 75 pour la communication bidirectionnelle entre au moins l'application et au moins la ressource, les moyens dynamiques utilisant des moyens statiques 80 incluant des moyens de traduction 83 entre les protocoles. Il ressort clairement de la description que cette séparation n'est qu'une des formes possibles de mise en oeuvre du procédé, faite pour en faciliter la mise en oeuvre.

Dans l'exemple décrit, les moyens de traduction 83 effectuent seulement une traduction unidirectionnelle pour donner à au moins ladite application une représentation, selon le protocole P correspondant à l'application, d'au moins la ressource gérée. Il est clair qu'il s'agit d'une caractéristique accessoire.

L'invention a pour autre objet corollaire un système 11, tel qu'un système informatique, incluant au moins une ressource représentée selon une base technologique commune B et communiquant avec au moins une application 42 selon le procédé défini précédemment.

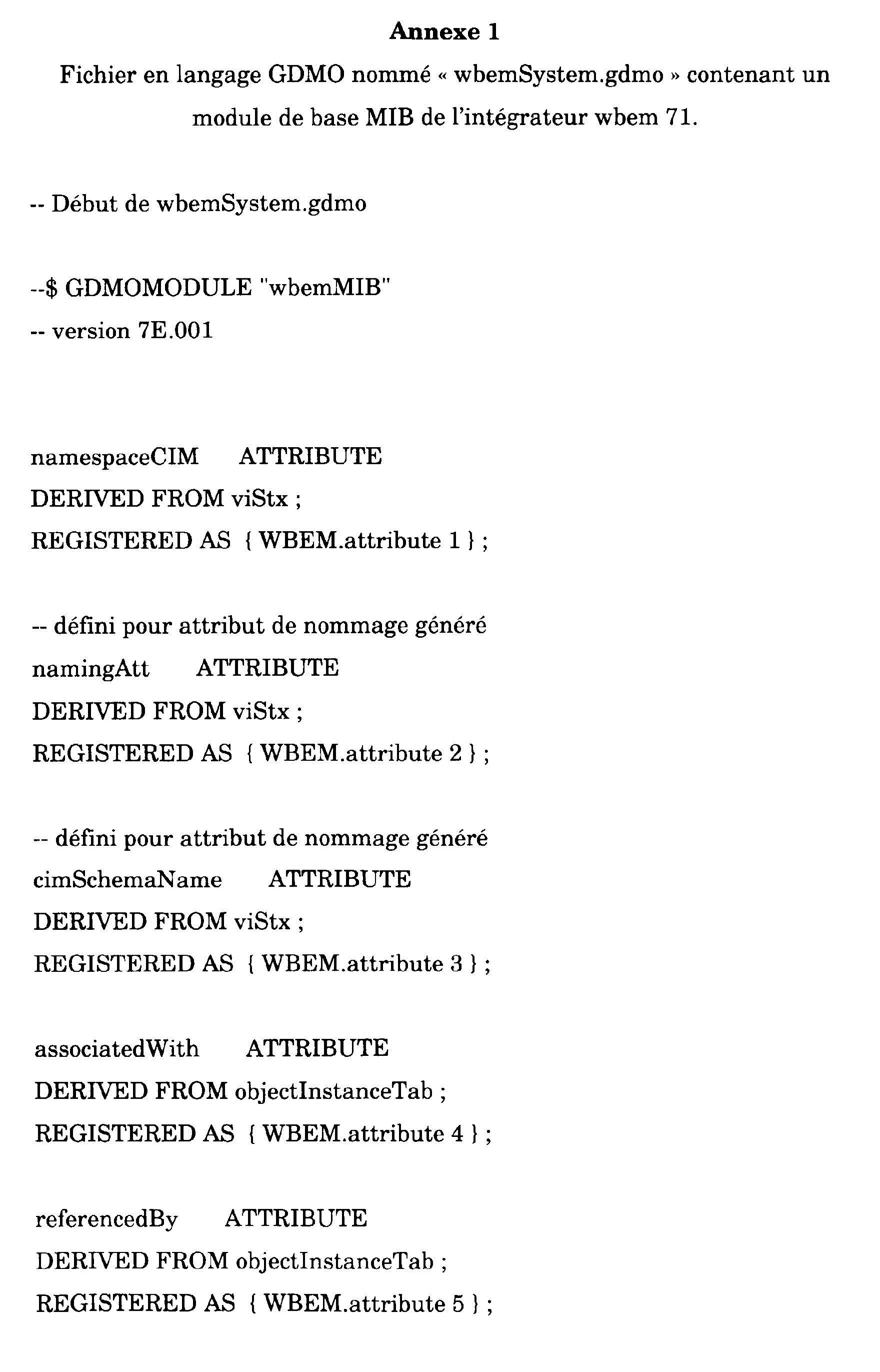

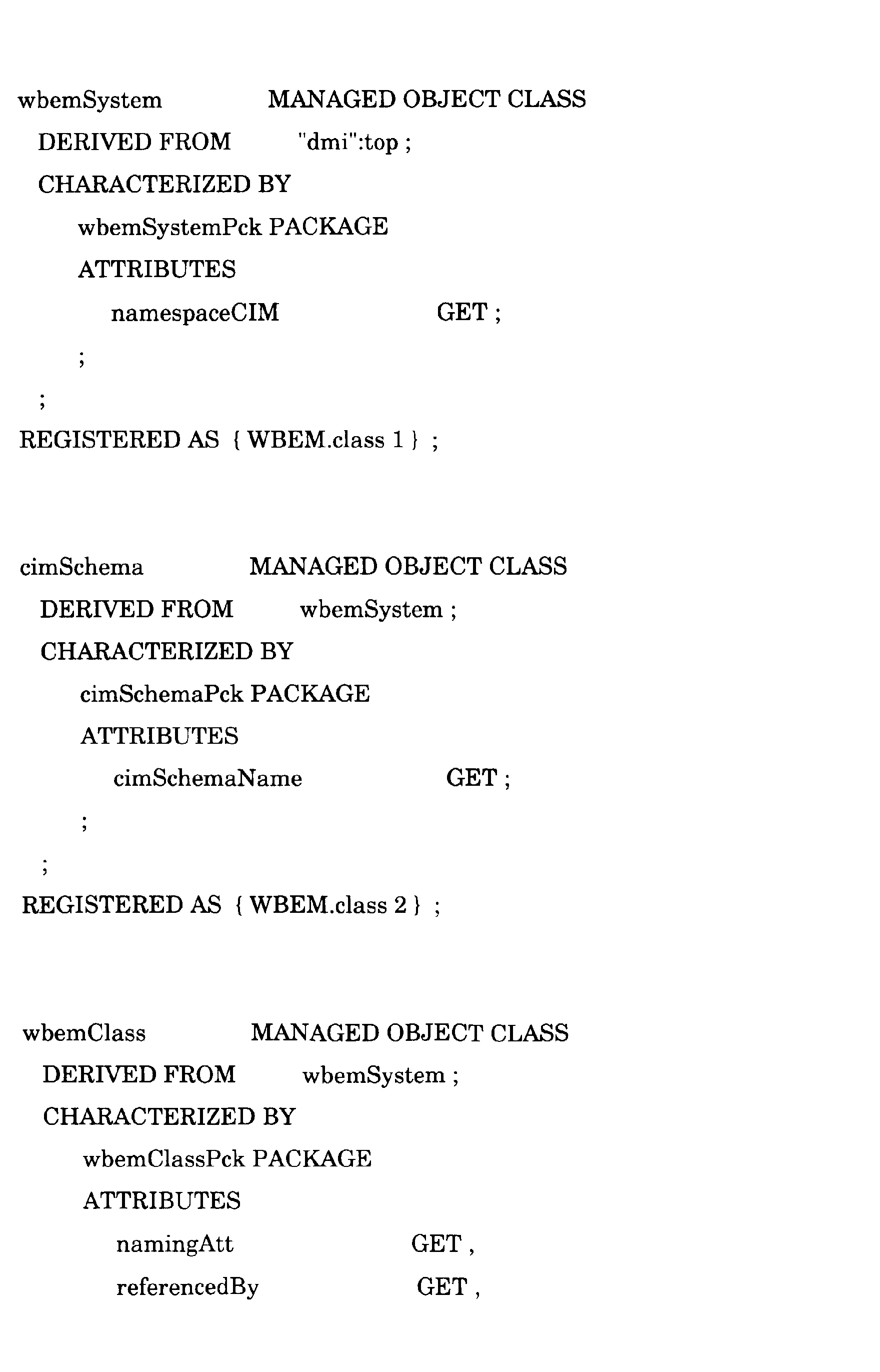

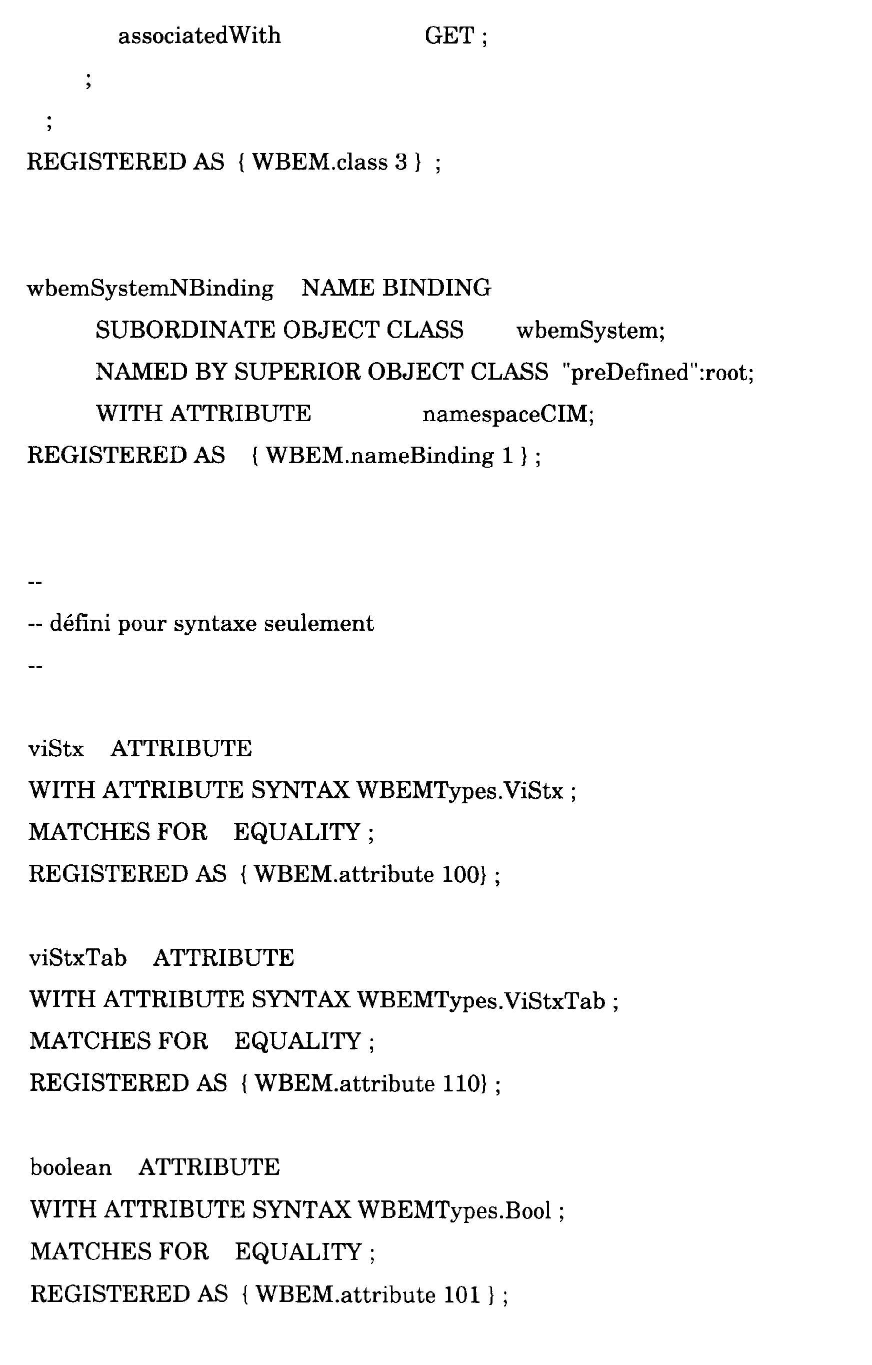

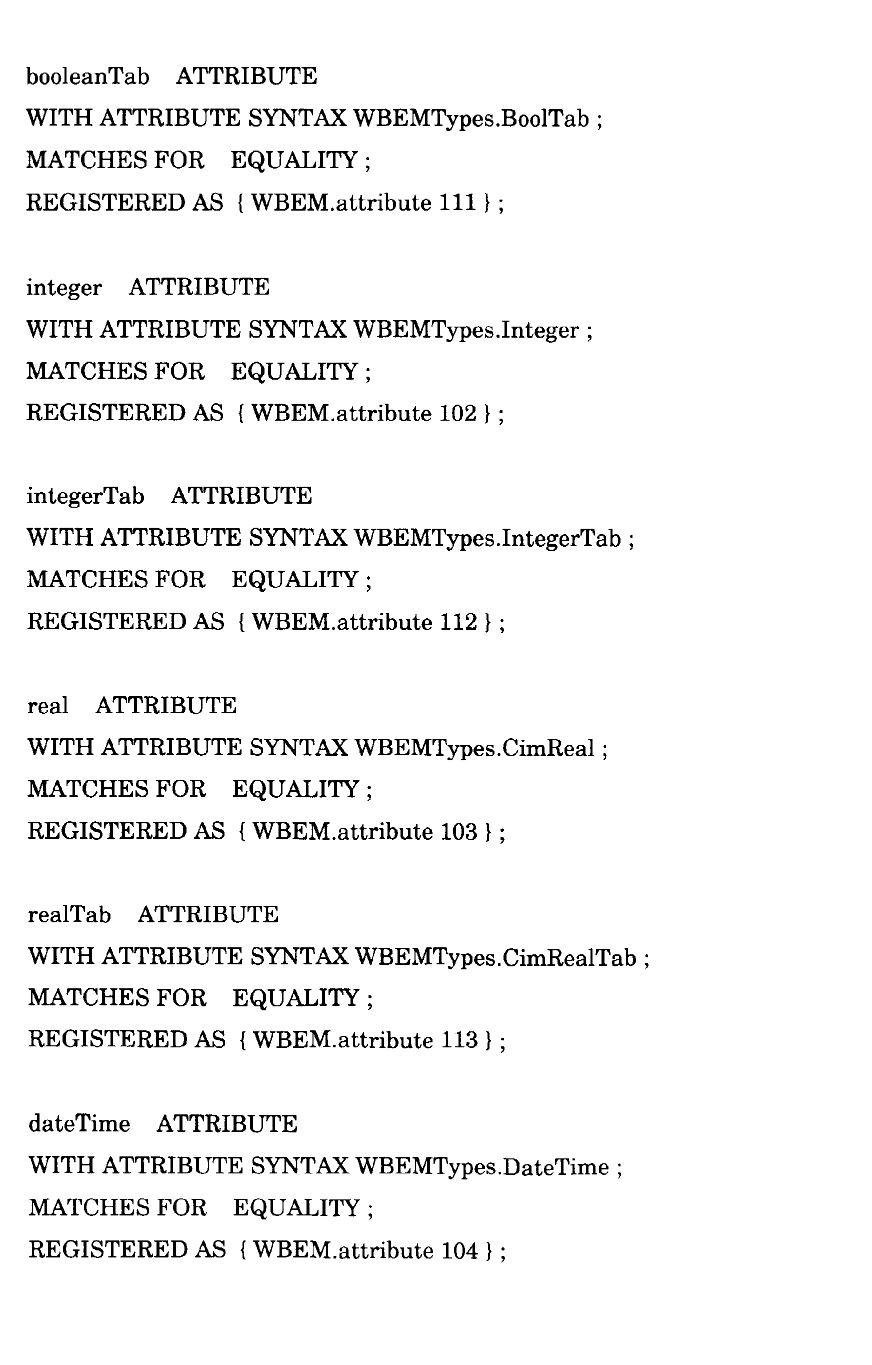

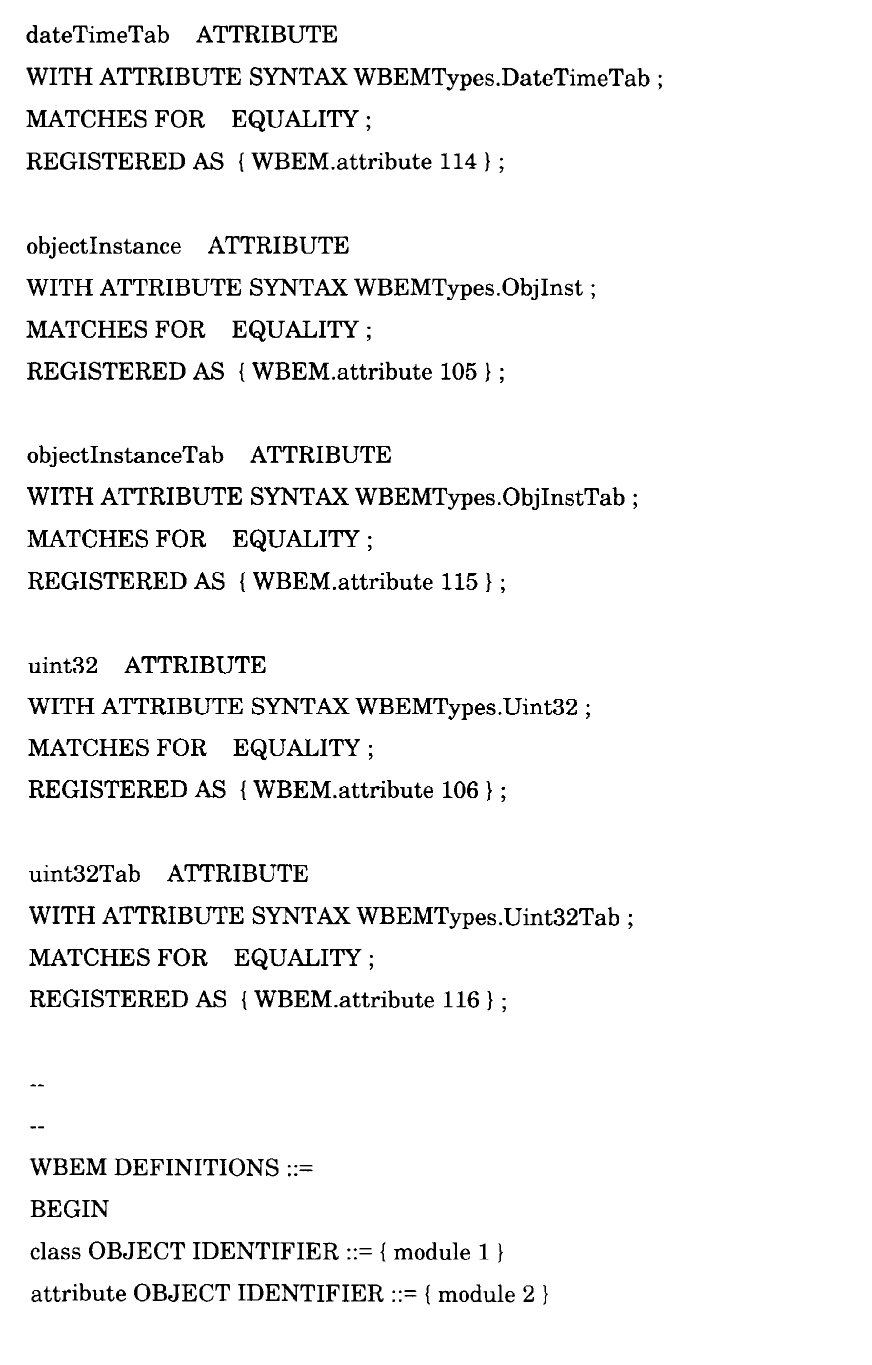

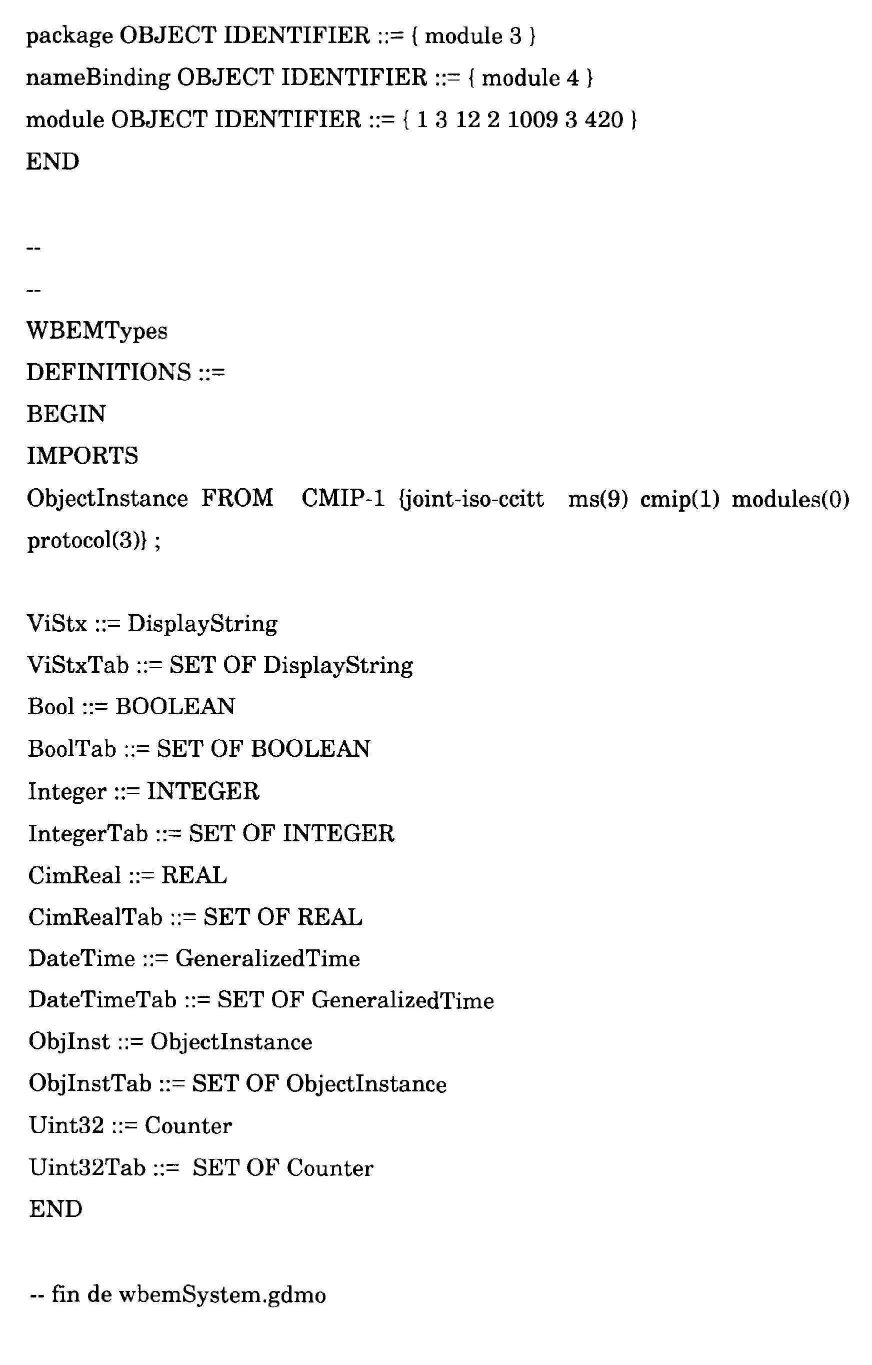

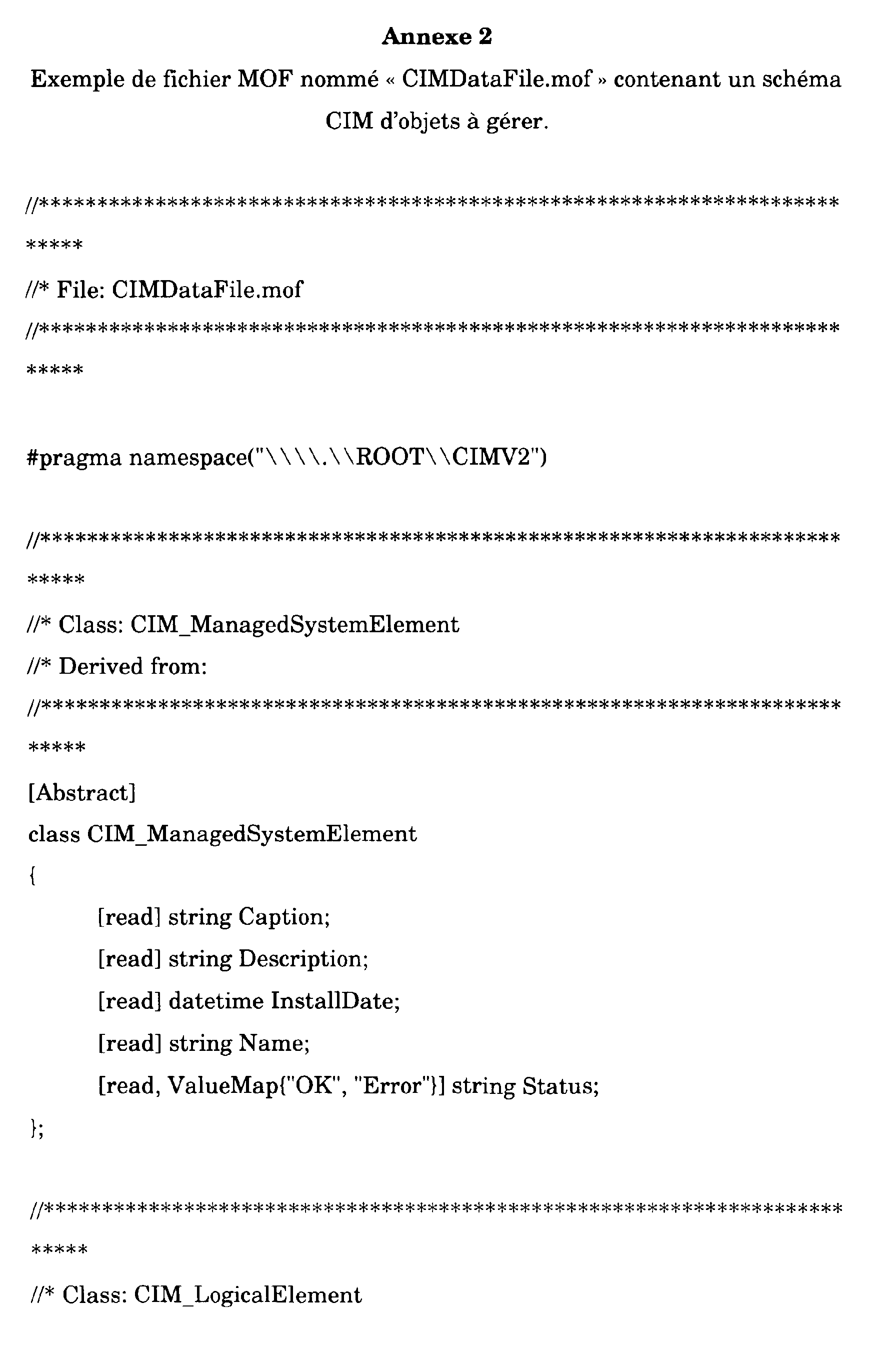

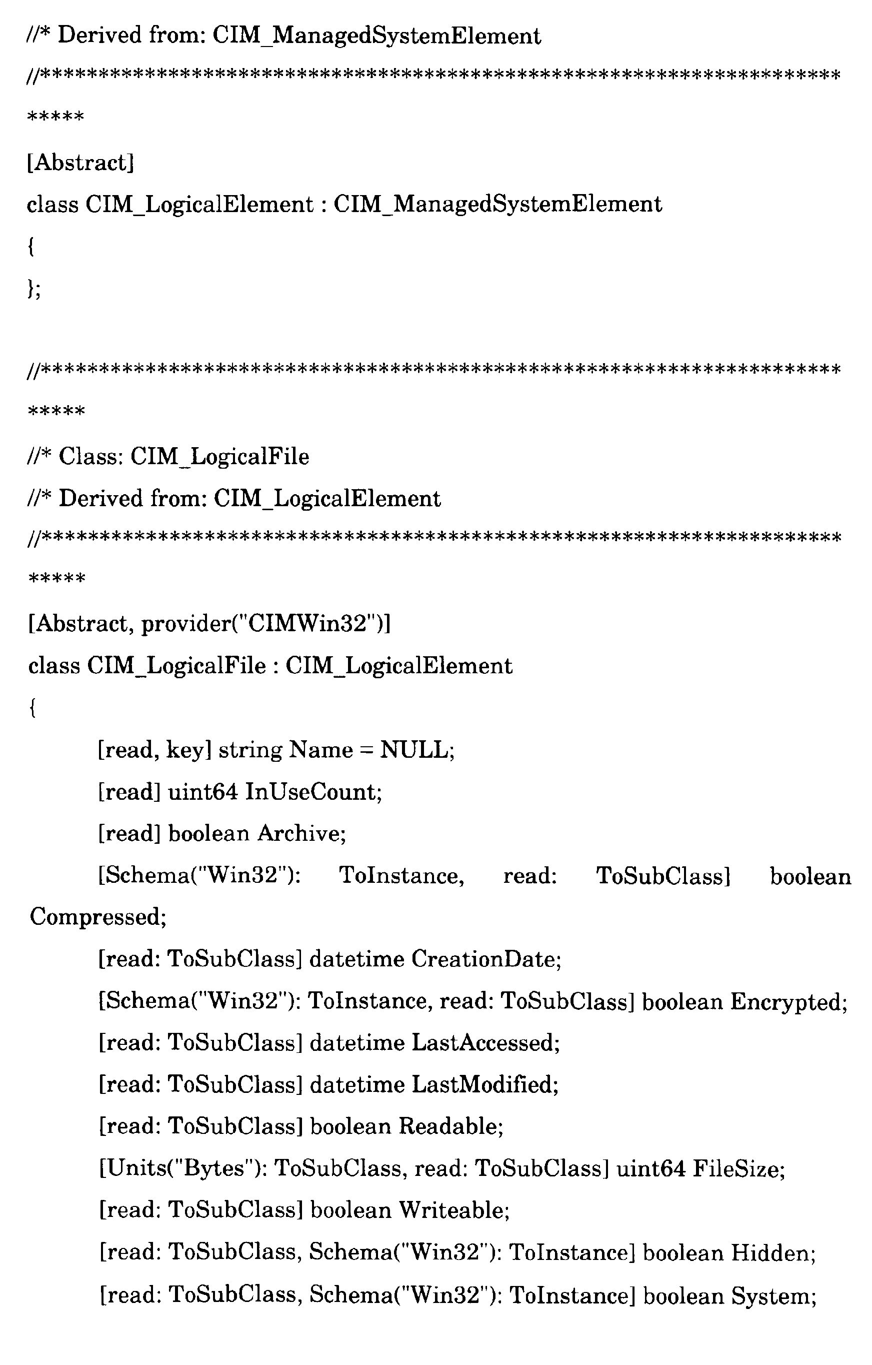

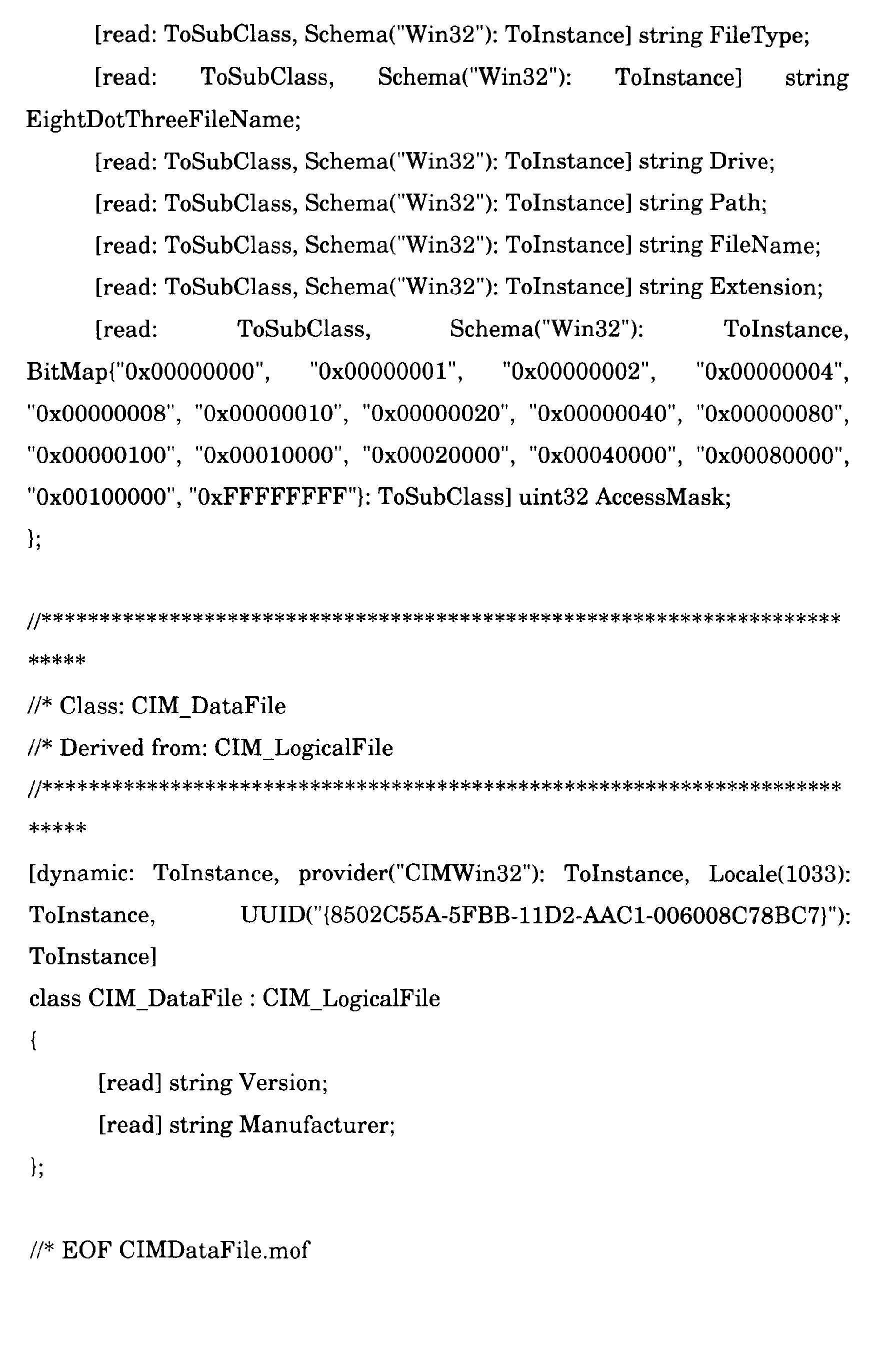

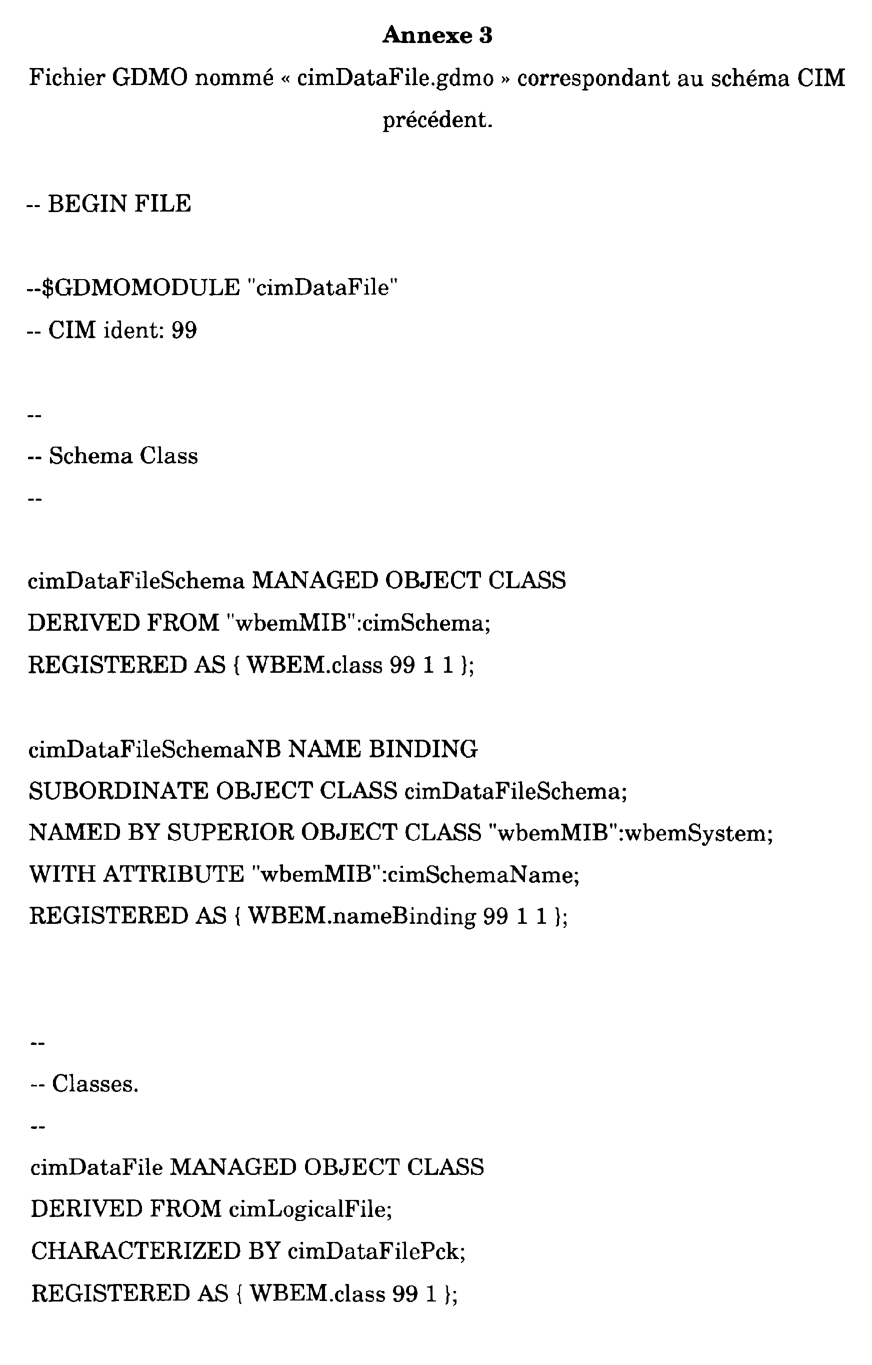

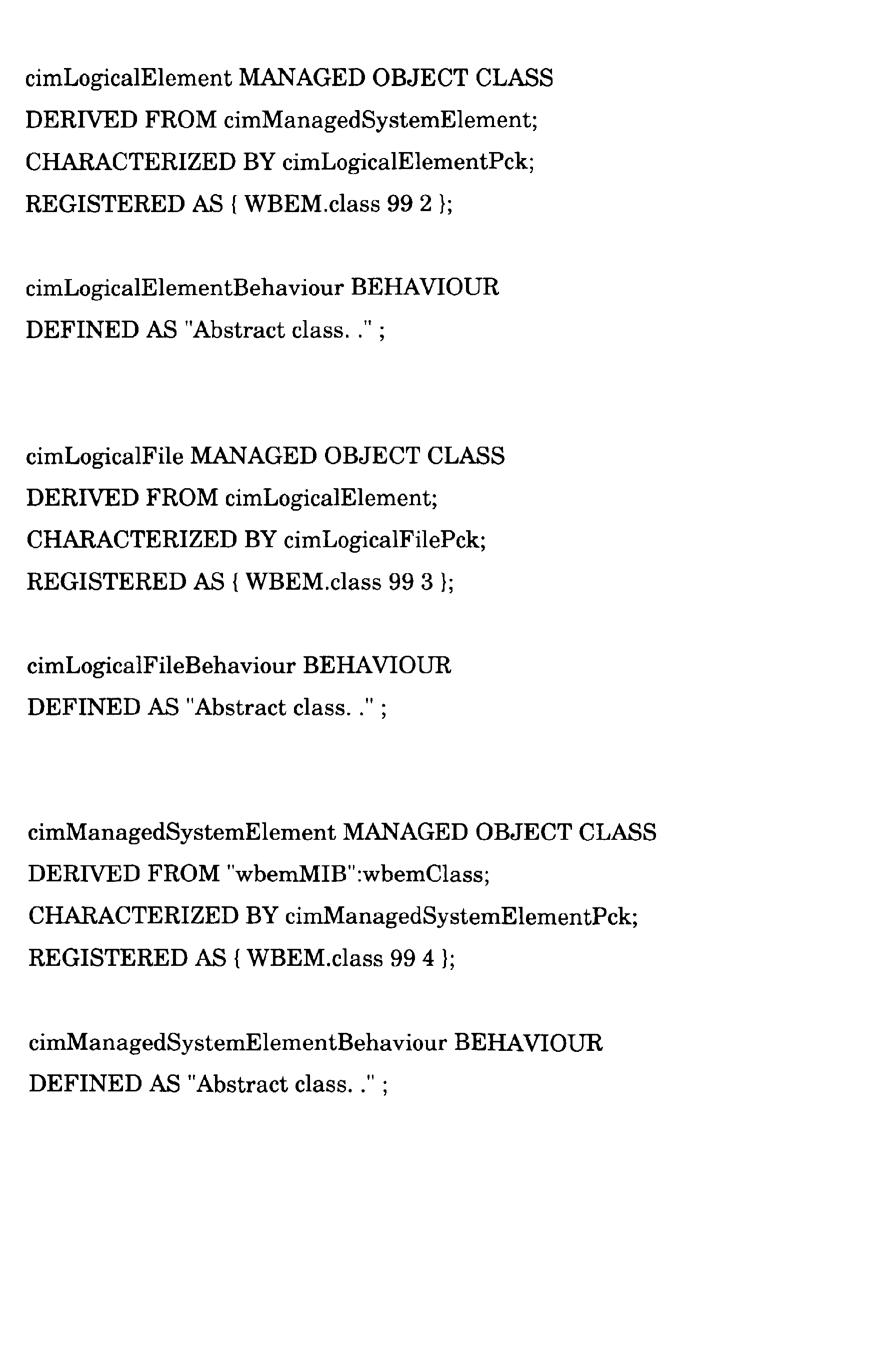

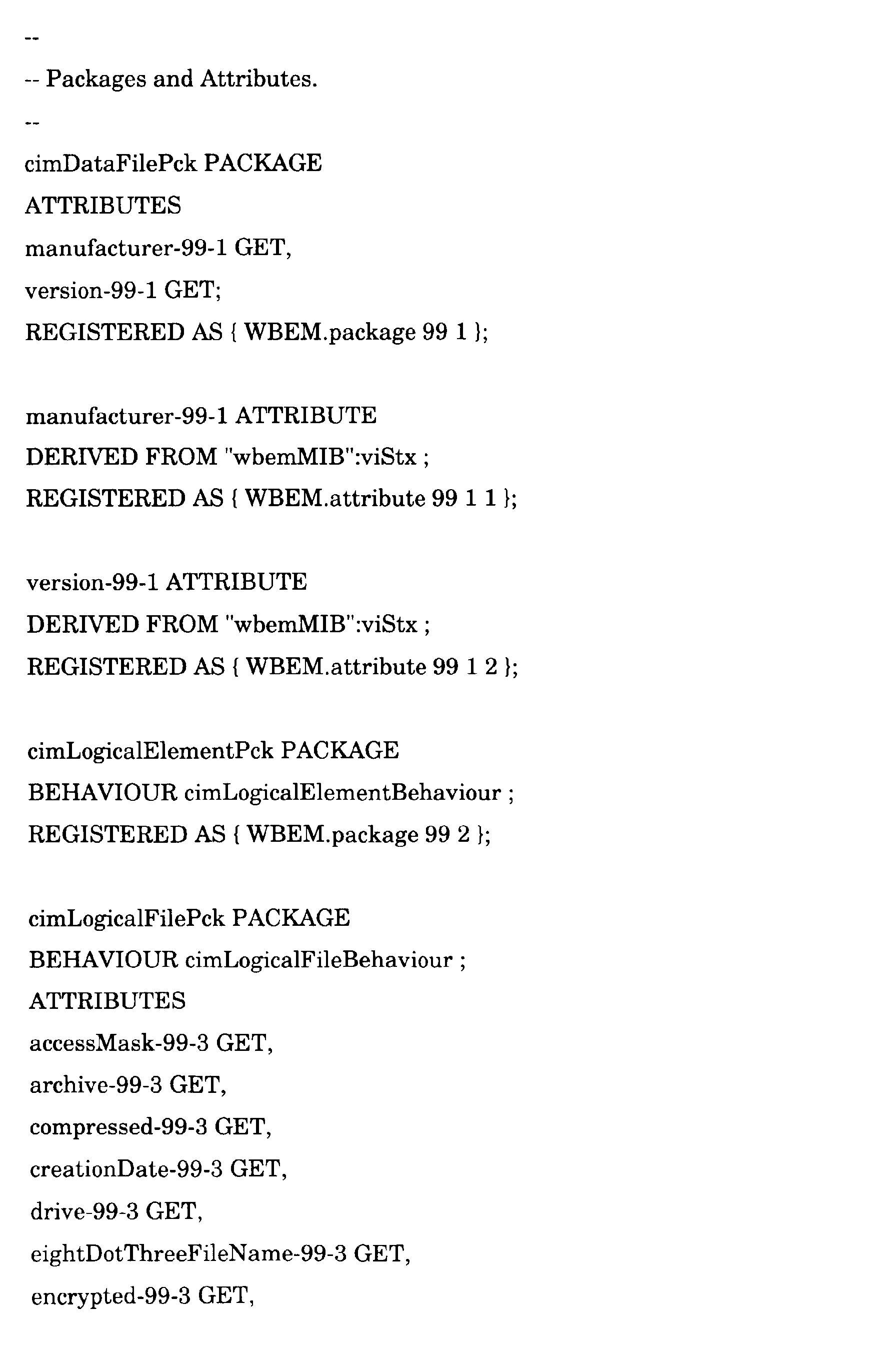

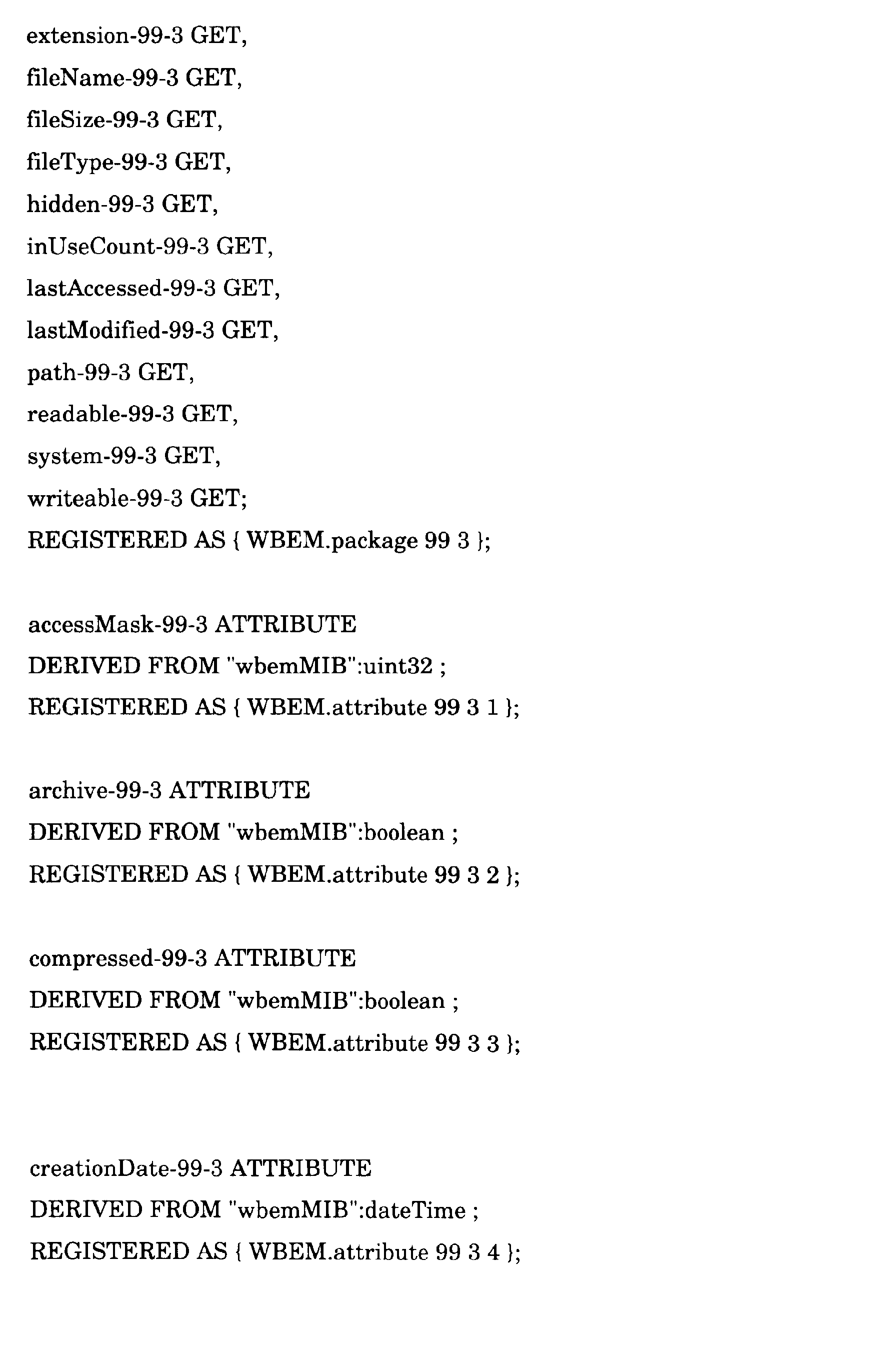

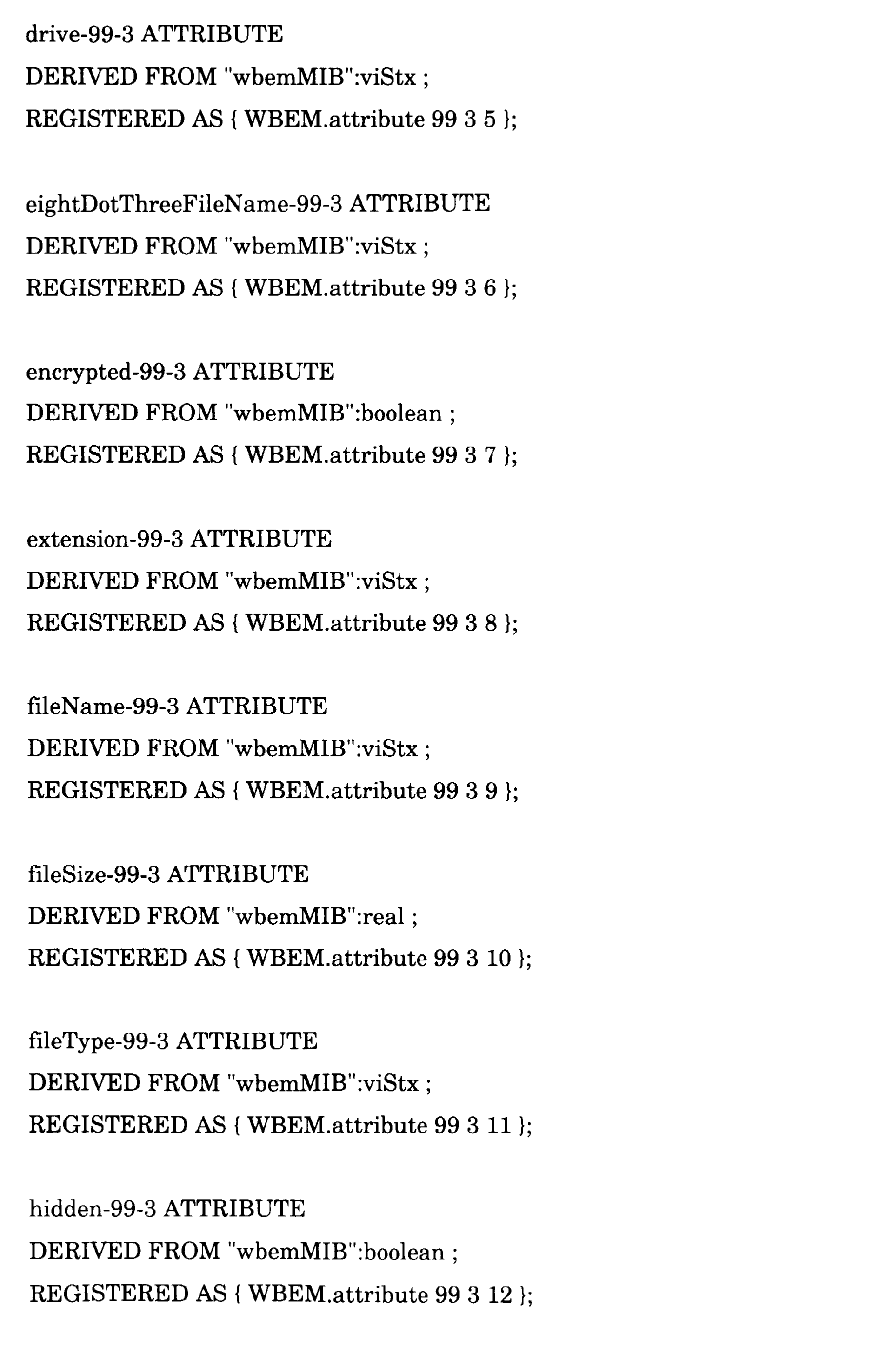

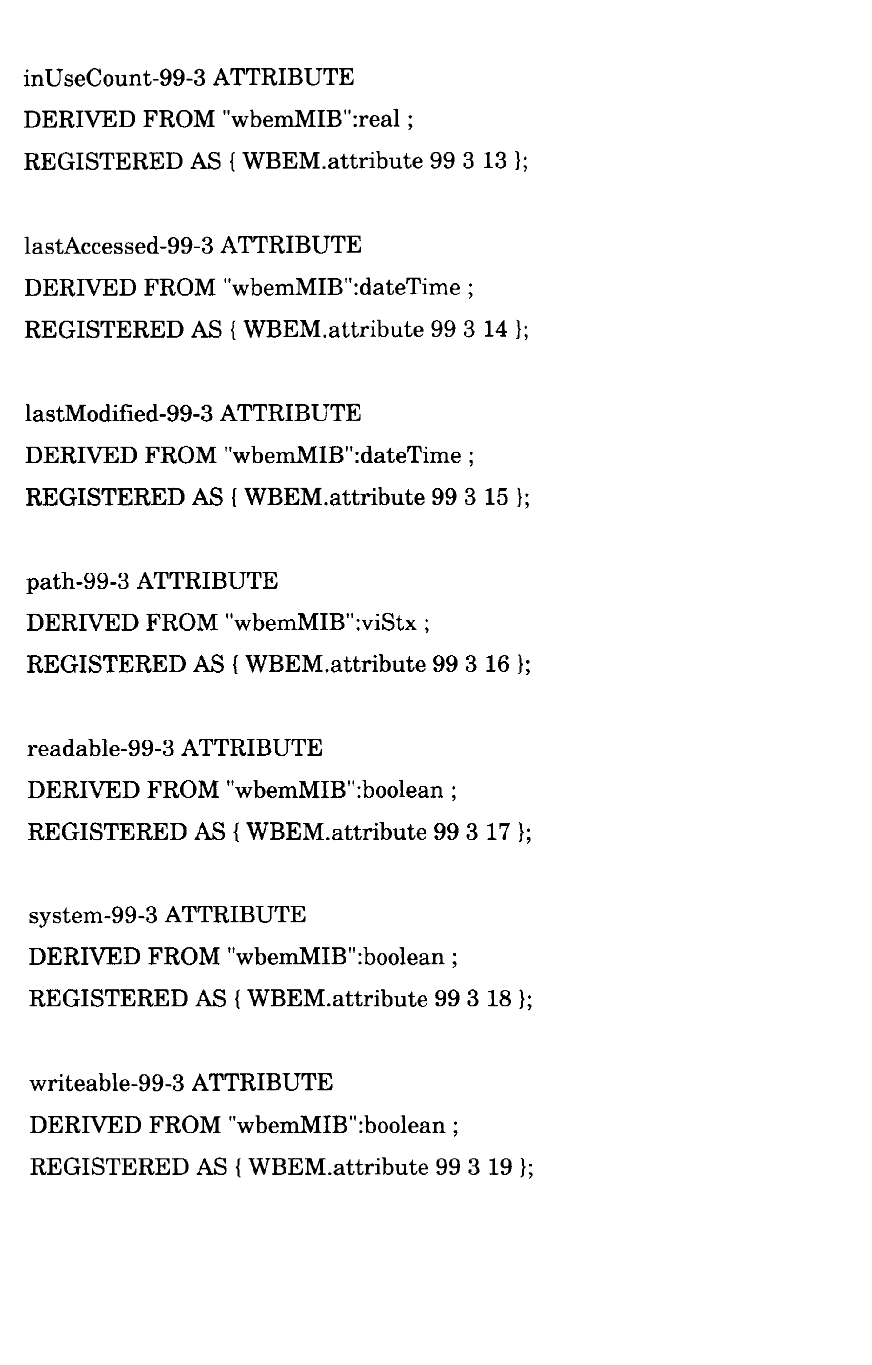

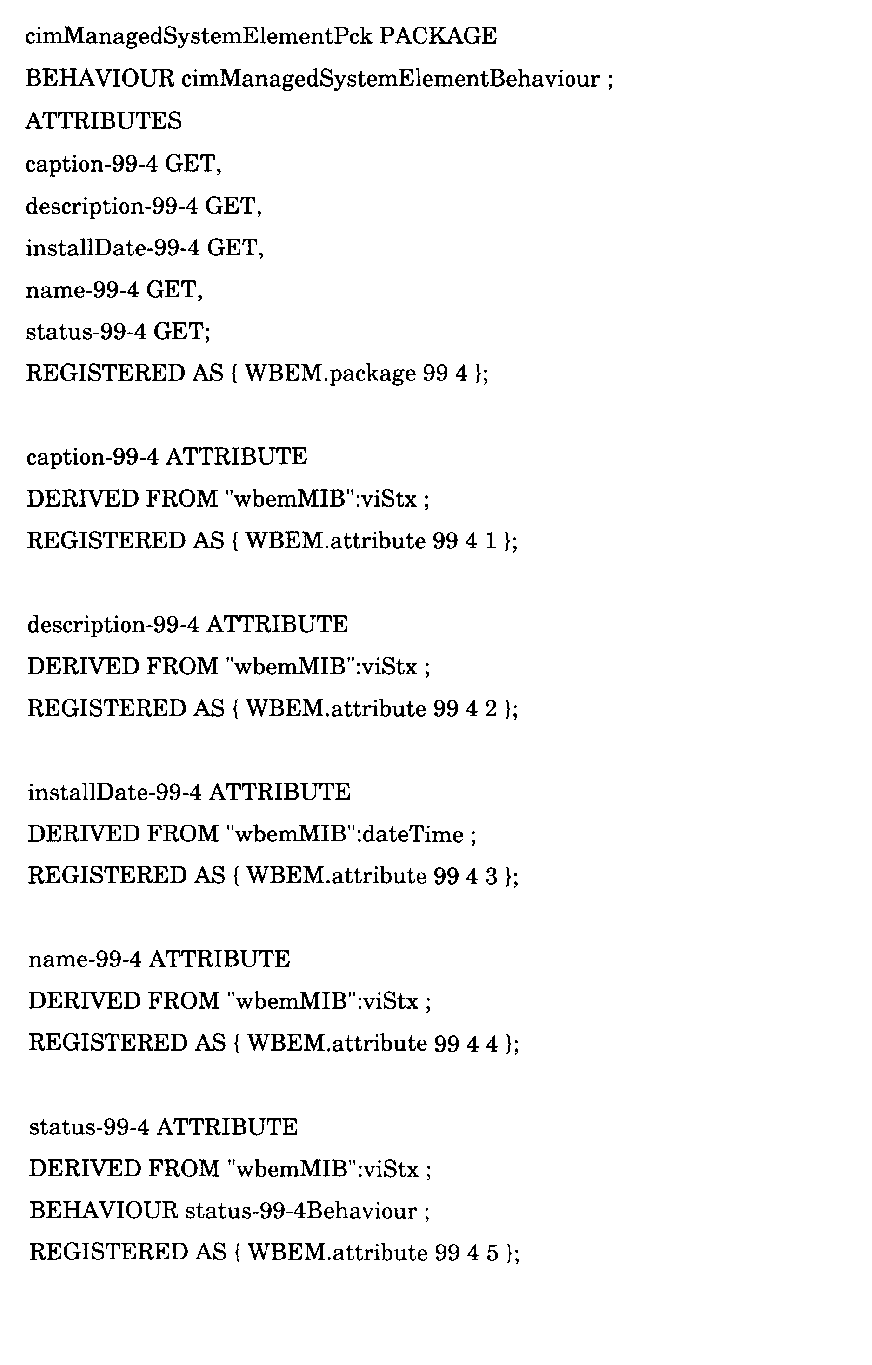

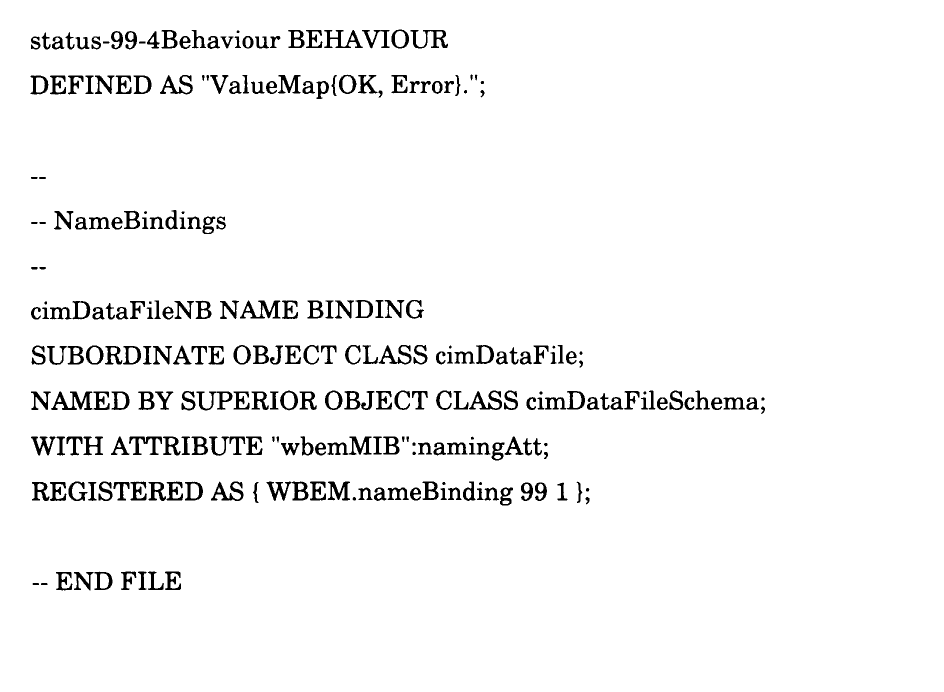

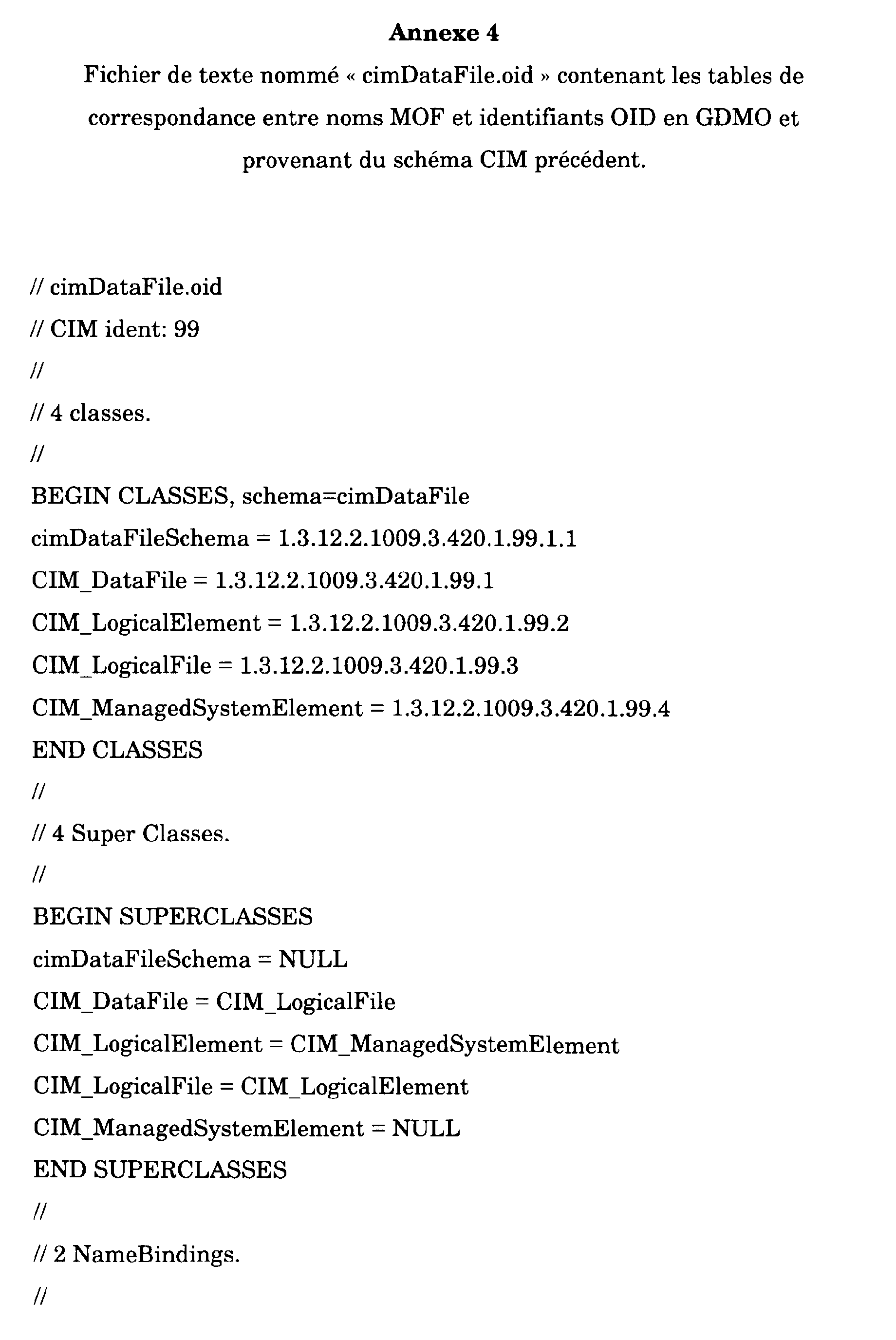

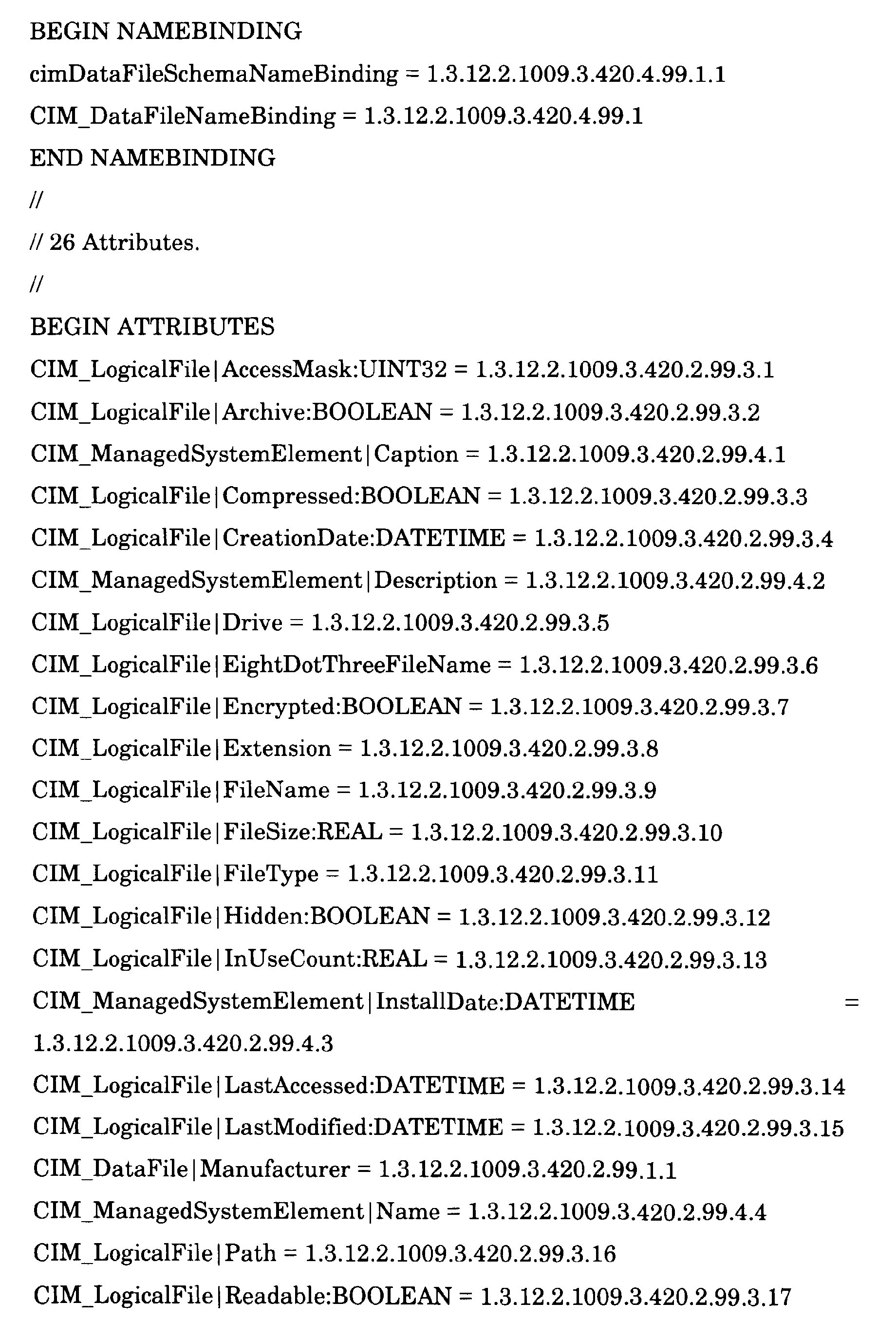

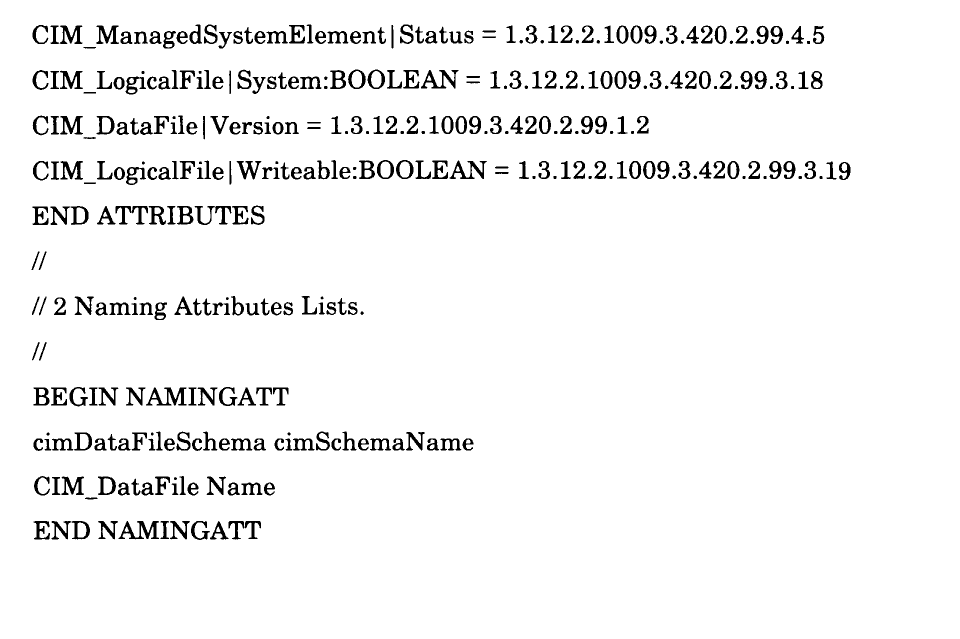

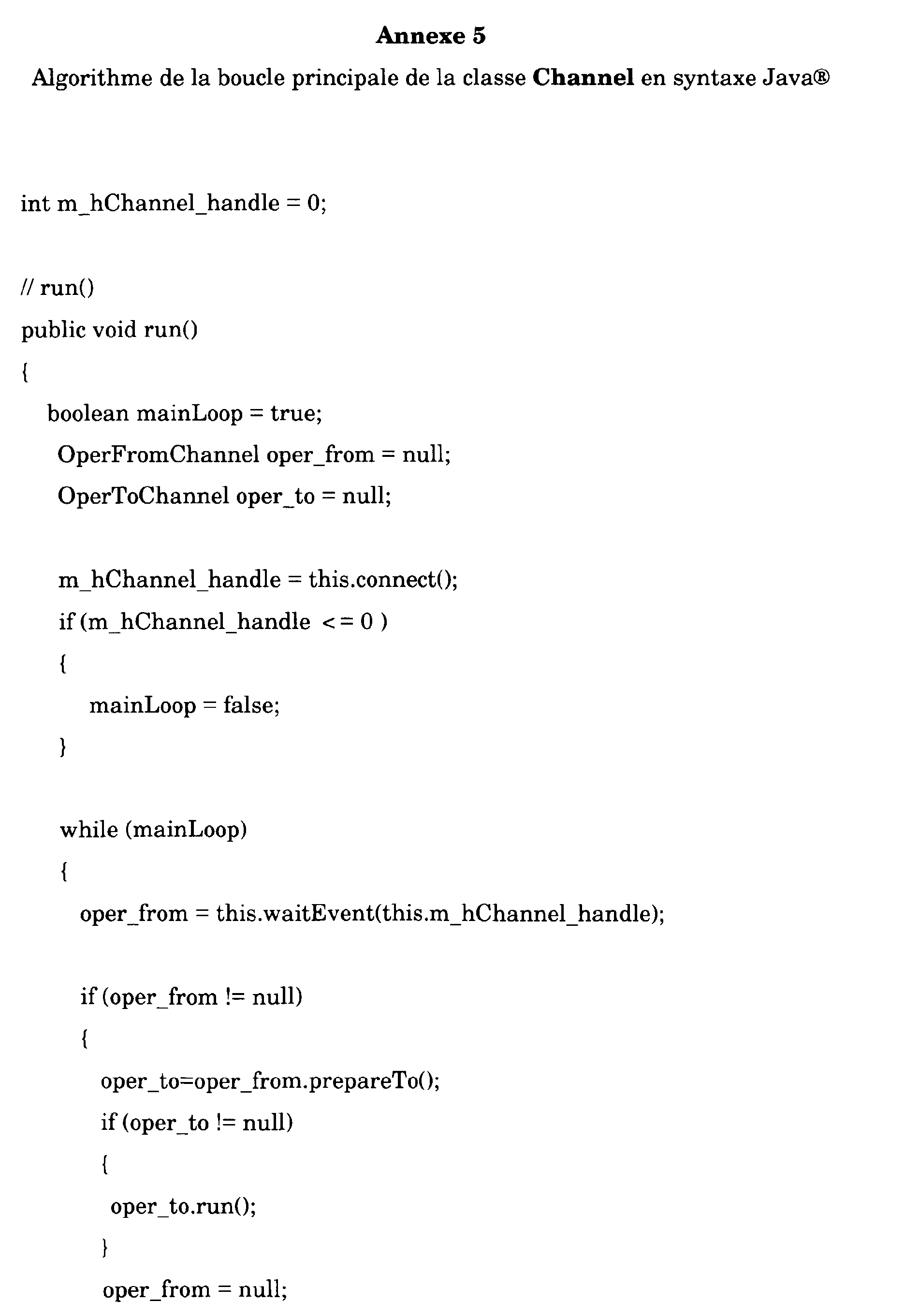

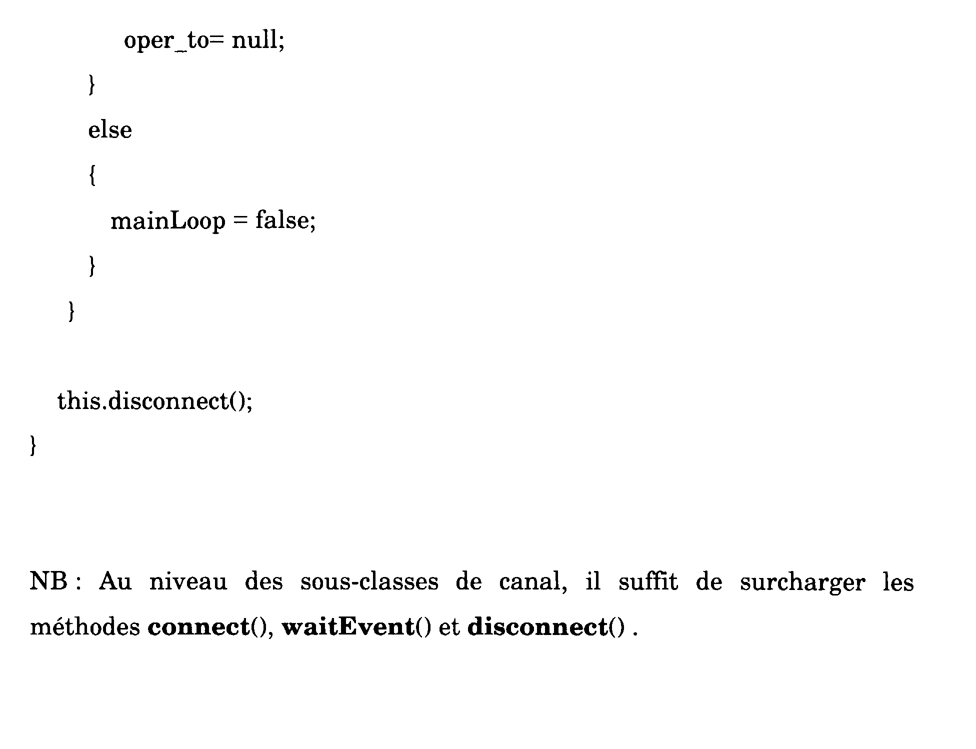

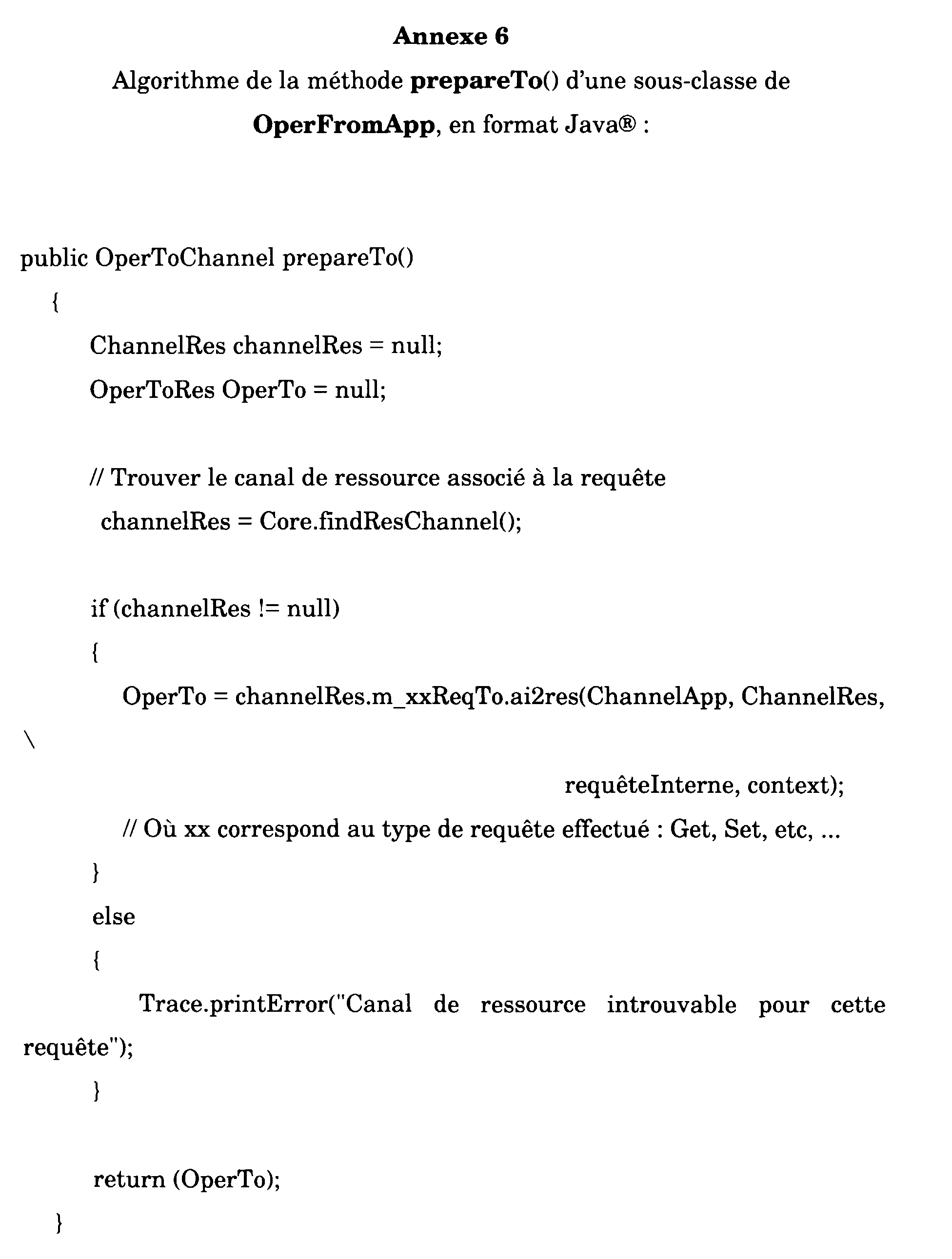

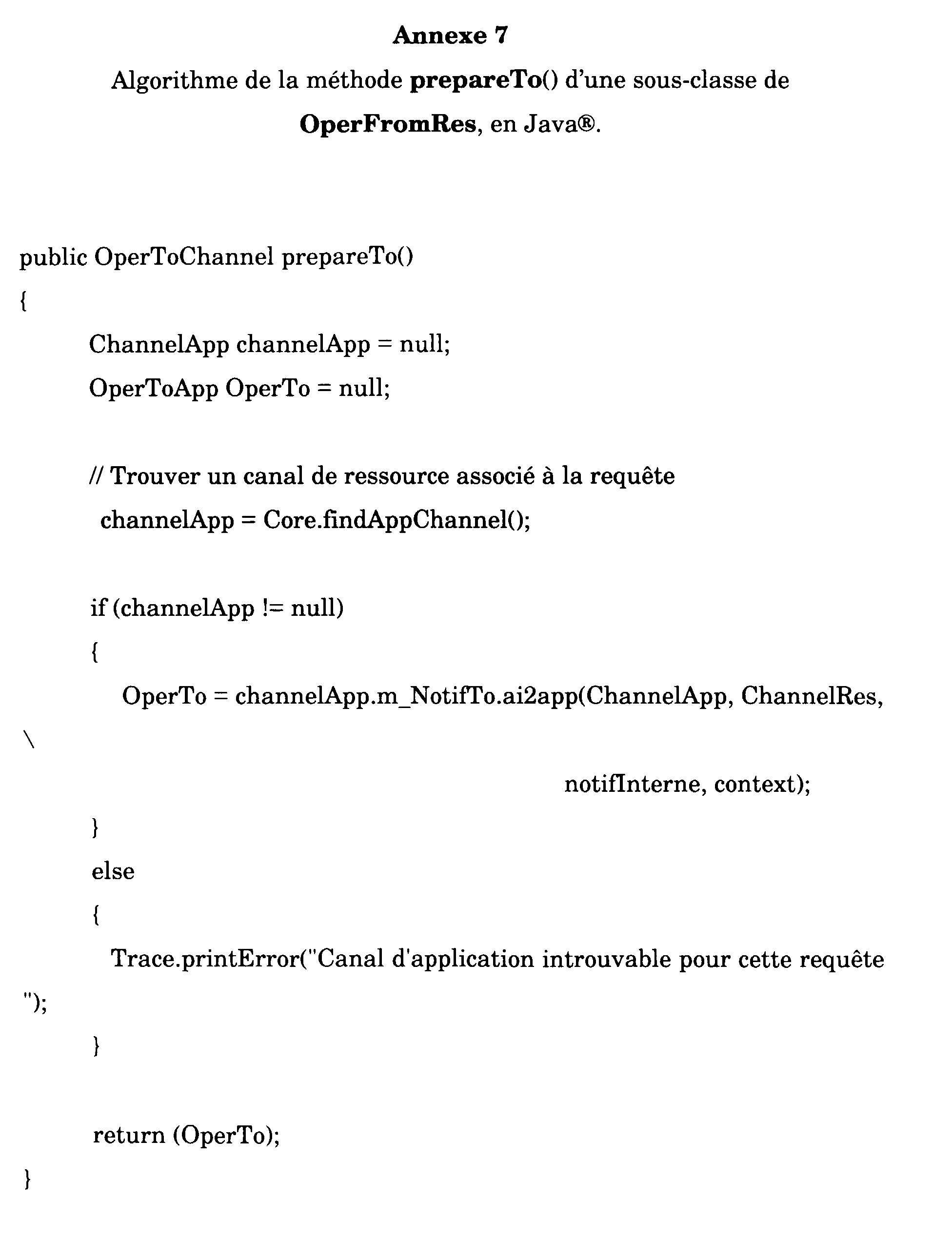

## Revendications

1. Procédé de communication sous plusieurs protocoles entre au moins une application (42) et au moins une ressource de système représentée selon une base technologique commune (B), la communication se faisant avec conversion entre au moins un protocole d'application (P) et au moins deux protocoles de ressource (Pa, Pb), caractérisé en ce qu'il comprend un multiplexage fait en technologie orientée objets et utilisant la base commune (B), au moins une classe principale (Core) pour créer (init) au moins deux canaux respectifs avec l'application et au moins la ressource selon l'un desdits protocoles de ressource, au moins une classe (Channel) pour connecter (connect) et déconnecter (disconnect) au moins les deux canaux créés avec l'application et avec la ressource et pour attendre (WaitEvent) une opération, et au moins une classe d'opération (OperFromChannel, OperToChannel) pour établir une communication entre au moins les deux canaux et faire ladite conversion.

2. Procédé selon la revendication 1, caractérisé en ce que la conversion inclut deux traductions successives (T1, T2, T'1, T'2), en passant par une forme intermédiaire (F1, F2), entre ledit protocole d'application (P) et l'un des protocoles de ressource (Pa, Pb).

3. Procédé selon la revendication 1 ou 2, caractérisé en ce que ladite conversion inclut l'association d'au moins ladite classe d'opération à au moins une classe constructrice (Factory).

4. Système d'administration (10) d'un système (11) incluant au moins une ressource représentée selon une base technologique commune (B), le système d'administration ayant au moins une application (42) communiquant avec au moins ladite ressource, caractérisé en ce que la communication entre au moins l'application et la ressource se fait par des moyens intégrateurs (71, 71') mettant en oeuvre le procédé défini par l'une des revendications 1 à 3.

5. Système d'administration selon la revendication 4, caractérisé en ce que les moyens intégrateurs (71, 71') sont construits selon le mode "sans état" signifiant qu'ils ne nécessitent pas l'implantation d'un arbre d'instances intermédiaires.

6. Système d'administration selon la revendication 4 ou 5, caractérisé en ce que les moyens intégrateurs (71, 71') comprennent des moyens dynamiques (73, 74, 75) pour la communication bidirectionnelle entre au moins l'application et au moins la ressource, les moyens dynamiques utilisant des moyens statiques (80) incluant des moyens de traduction (83) entre les protocoles.

7. Système d'administration selon l'une des revendications 4 à 6, caractérisé en ce que les moyens de traduction (83) effectuent seulement une traduction unidirectionnelle pour donner à au moins ladite application une représentation, selon le protocole (P) correspondant à l'application, d'au moins la ressource gérée.

8. Système (11), tel qu'un système informatique, incluant au moins une ressource représentée selon une base technologique commune (B), caractérisé en ce qu'au moins ladite ressource communique avec au moins une application (42) selon le procédé défini par l'une des revendications 1 à 3.

9. Programme d'ordinateur chargeable dans des moyens de mémoire (15) internes à un système informatique (11), caractérisé en ce qu'il comprend des parties de code pour la mise en oeuvre du procédé selon l'une des revendications 1 à 3.

10. Support d'enregistrement de programme d'ordinateur, caractérisé en ce qu'il comprend un programme lisible par une machine (12) d'un système informatique (11) et/ou dans un système d'administration (10) pour commander l'exécution du procédé selon l'une des revendications 1 à 3.
